# EUROPEAN PATENT APPLICATION

(11) **EP 4 319 084 A1**
(43) Date of publication of application: **07.02.2024**
(21) Application number: 22882830.7
(22) Date of filing: 18.10.2022
(51) Int. Cl.: H04L 41/50, H04L 41/5022, H04L 41/0803, H04L 41/122

(54) **METHOD AND APPARATUS FOR DEPLOYING CONTAINER SERVICE**

(30) Priority: 21.10.2021 CN 202111237271
(71) Applicant: Huawei Technologies Co., Ltd., Longgang Shenzhen, Guangdong 518129 (CN)
(72) Inventor: ZHU, Kaijie, Shenzhen, Guangdong 518129 (CN)
(74) Representative: Gill Jennings & Every LLP
(86) International application number: PCT/CN2022/125832
(87) International publication number: WO 2023/066224

(57) **Abstract**

This application provides a method for deploying a container service and an apparatus, and relates to the field of communication technologies. First information about one or more node instances required for instantiating a virtualized network function VNF is received, second information about the one or more node instances is determined, where the second information includes first priority information, and the first priority information indicates one or more priorities of deploying a first-type container service on the one or more node instances. The first-type container service is deployed on at least one node instance whose priority of deploying the first-type container service meets a first condition. A mechanism is provided for determining node instances on which a first-type container service is deployed.

## Description

### TECHNICAL FIELD

This application relates to the field of communication technologies, and in particular, to a method for deploying a container service and an apparatus.

### BACKGROUND

A container as a service (container as a service, CaaS) technology is a virtualization technology used by telecom network carriers to implement cloud-based transformation oriented to Internet technologies (Internet technology, IT). A network function virtualization (network function virtualization, NFV) technology is based on a virtualization technology, and implements a physical network function (physical network function, PNF) in a conventional non-virtualized network through a virtualized network function (virtualized network function, VNF), thereby reducing costs of implementing a physical network function by using a dedicated device. The CaaS technology is gradually applied to a network function virtualization (network function virtualization, NFV) architecture to implement lightweight management of the VNF. In an NFV architecture that integrates the CaaS technology, one or more container services may be deployed using the CaaS technology to jointly implement a VNF, so that the VNF may be managed by managing the one or more container services.

In the NFV architecture that integrates the CaaS technology, a container service may be deployed on a node instance. The node instance includes a physical machine or a virtual machine (virtual machine, VM) instance. Resources of different physical machines may be isolated from each other, or resources of different virtual machine instances may be isolated from each other. Therefore, deploying the container service on the node instance can implement lightweight management of the VNF, and resources of the VNFs can be isolated from each other. However, no solution is available to determine specific node instances on which a corresponding type of container service is deployed.

### SUMMARY

Embodiments of this application provide a method for deploying a container service and an apparatus, to provide a mechanism for deploying a container service, to determine specific node instances on which a corresponding type of container service is deployed.

According to a first aspect, an embodiment of this application provides a method for deploying a container service. The method may be performed by a first network element. The first network element is, for example, an NFVO or a VNFM, or a communication apparatus having an NFVO or a VNFM function, or a chip system having an NFVO or a VNFM function. The method includes: receiving first information, where the first information includes information about one or more node instances, and the one or more node instances are for instantiating a virtualized network function VNF; determining second information, where the second information includes first priority information, and the first priority information indicates one or more priorities of deploying a first-type container service on the one or more node instances; and sending a first deployment request to a container as a service manager, where the first deployment request is for requesting to deploy the first-type container service on at least one node instance of the one or more node instances, and the at least one node instance is a node instance whose priority of deploying the first-type container service meets a first condition.

In this embodiment of this application, a first network element determines first priority information about the priority of deploying the first-type container service on the one or more nodes, and indicates the container as a service manager, to deploy the first-type container service on the at least one node instance whose priority of deploying the first-type container service meets the first condition. This provides a manner of determining node instances on which the first-type container service is deployed, thereby providing a mechanism for deploying a container service. In addition, in this embodiment of this application, the first-type container service does not need to be deployed on a node instance whose priority does not meet the first condition. In this way, the first-type container service can be prevented from being deployed on an excessive quantity of node instances, and the deployment of the first-type container service can be prevented from occupying excessive node instances.

In a possible implementation, the first condition includes: a priority of deploying the first-type container service is higher than or equal to a preset priority; or a sequence number of a priority of deploying the first-type container service is less than or equal to N, where N is a positive integer, and the sequence number of the priority is obtained by sorting the priorities of deploying the first-type container service on the one or more node instances in a preset sequence.

In the foregoing implementation, the container as a service manager, may select a node instance whose priority is higher than or equal to the preset priority to deploy the first-type container service, or select a node instance whose priority is relatively high to deploy the first-type container service, that is, two conditions for selecting a node instance are provided for deploying the first-type container service.

In a possible implementation, the second information further includes a maximum quantity, and the maximum quantity is a maximum quantity of node instances to be deployed for the first-type container service, where a quantity of the at least one node instance is less than or equal to the maximum quantity.

In the foregoing implementation, the second information further includes a maximum quantity, and the maximum quantity may limit a quantity of node instances for deploying the first-type container service, so that there are not excessive node instances for deploying the first-type container service, thereby avoiding deployment of excessive first-type container services.

In a possible implementation, determining the maximum quantity includes: determining the maximum quantity from a virtualized network function descriptor VNFD, where the VNFD includes a maximum quantity of node instances to be deployed for one or more types of container services, and the first-type container service is one of the one or more types of container services.

In the foregoing implementation, a manner of determining the maximum quantity is provided. Because the VNFD may be preconfigured, the first network element determines the maximum quantity of node instances required for deploying the first-type container service from the VNFD, so that the manner of determining the maximum quantity is relatively simple.

In a possible implementation, the determining second information includes: determining the first priority information from the VNFD based on type information about the one or more node instances included in the information about the one or more node instances, where the VNFD includes type information about a node instance, type information about a container service that can be deployed by each type of node instance, and priority information about deploying one or more types of container services on each type of node instance.

In the foregoing implementation, the VNFD includes the priority information about each type of node instance. Subsequently, the first network element may determine the first priority information about the one or more node instances from the VNFD based on the type information about the one or more node instances, without involving a complex calculation process, so that a manner of determining the first priority information is simpler.

In a possible implementation, priorities of deploying a same type of container services on different types of node instances in the VNFD are different; and/or priorities of deploying different types of container services on a same type of node instances in the VNFD are different.

In the foregoing implementation, priorities of deploying a same type of container services on different types of node instances in the VNFD may be different. In this way, a same type of container services are easily deployed on different types of node instances in a distributed manner. In addition, priorities of deploying different types of container services on a same type of node instances may also be different. In this way, different types of container services are not centrally deployed on a same type of node instances. This helps to deploy different types of container services on different types of node instances in a distributed manner, so as to properly allocate resources on each node instance.

In a possible implementation, the method further includes: sending a first addition request to the container as a service manager, where the first addition request is for requesting to add a label to the at least one node instance, and the label indicates that the node instance supports deployment of the first-type container service.

In the foregoing implementation, the first network element may indicate that the container as a service manager adds a label to the at least one node instance. The label indicates that the node instance supports deployment of the first-type container service. In this way, the container as a service manager may subsequently deploy the first-type container service based on the label.

In a possible implementation, the method further includes: receiving third information, where the third information includes information about a first node instance, and the first node instance is a node instance to be added to the VNF; determining fourth information, where the fourth information includes second priority information, and the second priority information includes a priority of deploying the first-type container service on the first node instance; and sending a second deployment request to the container as a service manager, if a priority of deploying the first-type container service on the first node instance meets a second condition, where the second deployment request is for requesting to deploy the first-type container service on the first node instance.

In the foregoing implementation, if the VNF needs to add the first node instance, it is determined whether a priority of deploying the first-type container service on the newly added first node instance meets a second condition. If the priority of the first node instance meets the second condition, it is determined that the first node instance needs to deploy the first-type container service, and the container as a service manager may be indicated to deploy the first-type container service on the first node instance. In this implementation, the first-type container service may be selectively deployed on the newly added first node instance based on the priority of deploying the first-type container service on the first node instance, to adapt to a VNF scale-out or scale-in scenario.

In a possible implementation, the second condition includes: The priority of deploying the first-type container service on the first node instance is higher than a priority of deploying the first-type container service on some or all node instances in the at least one node instance.

In the foregoing implementation, if the priority of deploying the first-type container service on the first node instance is higher than the priority of deploying the first-type container service on the some or all node instances in the at least one node instance, the first-type container service may be deployed on the first node instance, so that it can be ensured that the first-type container service is always deployed on a node instance with a higher priority.

In a possible implementation, the method further includes: sending a deletion request to the container as a service manager, where the deletion request is for requesting to delete the first-type container service deployed on the some or all node instances in the at least one node instance.

In the foregoing implementation, the first-type container service is deployed on the first node instance. Correspondingly, the first-type container service deployed on some or all node instances in the at least one node instance may be indicated to be deleted, so as to avoid deploying the first-type container service on excessive node instances, thereby avoiding that the first-type container service occupies excessive resources on the node instances.

In a possible implementation, the method further includes: determining that the quantity of the at least one node instance is equal to the maximum quantity, where the second information further includes the maximum quantity, and the maximum quantity is a maximum quantity of node instances to be deployed for the first-type container service.

In the foregoing implementation, when determining that the quantity of the at least one node instance is equal to the maximum quantity, the first network element may indicate that the container as a service manager deletes the first-type container service deployed on some or all node instances of the at least one node instance, so as to ensure that the quantity of node instances on which the first-type container service deploys always does not exceed the maximum quantity.

In a possible implementation, the method further includes: sending a resource allocation request to a virtualized infrastructure manager VIM, where the resource allocation request is for requesting to allocate a resource to the one or more node instances; and receiving resource information from the VIM, where the resource information indicates resources of the one or more node instances.

In the foregoing implementation, the first network element may send a resource allocation request to the VIM, and receive resource information fed back by the VIM, so as to create one or more node instances based on the resource information. This provides a manner of creating the one or more node instances.

According to a second aspect, a method for deploying a container service is provided. The method may be performed by a first network element. For an implementation of the first network element, refer to the foregoing description. The method includes: receiving first information, where the first information includes information about one or more node instances, and the one or more node instances are for instantiating a virtualized network function VNF; determining second information, where the second information includes a maximum quantity, and the maximum quantity is a maximum quantity of node instances to be deployed for a first-type container service; and sending a first deployment request to a container as a service manager, where the first deployment request is for requesting to deploy the first-type container service on at least one node instance of the one or more node instances, and a quantity of the at least one node instance is less than or equal to the maximum quantity.

In the foregoing implementation, the first network element may determine a maximum quantity of node instances to be deployed for the first-type container service, and indicate that the container as a service manager deploys the first-type container service on at least one node instance that is less than or equal to the maximum quantity. This provides a mechanism for deploying a container service, and may determine a manner of deploying the node instance for the first-type container service. In addition, because a quantity of node instances for deploying the first-type container service is limited to the maximum quantity, it can be avoided that the first-type container service is deployed on an excessive quantity of node instances, and the first-type container service can be prevented from occupying excessive resources on the node instances.

In a possible implementation, the determining second information includes: determining the maximum quantity from a virtualized network function descriptor VNFD, where the VNFD includes a maximum quantity of node instances to be deployed for one or more types of container services, and the first-type container service is one of the one or more types of container services.

In the foregoing implementation, the VNFD includes the maximum quantity of node instances to be deployed for the first-type container service, and the first network element may directly determine the maximum quantity from the VNFD. This provides a manner of determining the maximum quantity. In addition, because the first network element does not need to perform complex calculation processing to determine the maximum quantity, a manner of determining the maximum quantity is simpler.

In a possible implementation, the second information further includes first priority information, the first priority information indicates a priority of deploying the first-type container service on the at least one node instance, where the at least one node instance is a node instance whose priority of deploying the first-type container service meets a first condition.

In the foregoing implementation, the second information may further include first priority information. In this case, a quantity of at least one node instance for deploying the first-type container service needs to be less than or equal to a maximum quantity, and a priority of deploying the first-type container service on the at least one node instance needs to meet the first condition, so that both the determined quantity of at least one node instance and the determined priority of deploying the first-type container service can meet the first condition.

In a possible implementation, the first condition includes: a priority of deploying the first-type container service is higher than or equal to a preset priority; or a sequence number of a priority of deploying the first-type container service is less than or equal to N, where N is a positive integer, and the sequence number of the priority is obtained by sorting the priorities of deploying the first-type container service on the one or more node instances in a preset sequence.

In a possible implementation, the method further includes: determining the first priority information from the virtualized network function descriptor VNFD based on type information about the one or more node instances included in the information about the one or more node instances, where the VNFD includes type information about a node instance, type information about a container service that each type of node instance supports for deployment, and priority information about deploying one or more types of container services on each type of node instance.

In a possible implementation, priorities of deploying a same type of container services on different types of node instances in the VNFD are different; and/or priorities of deploying different types of container services on a same type of node instances in the VNFD are different.

In a possible implementation, the method further includes: sending a first addition request to the container as a service manager, where the first addition request is for requesting to add a label to the at least one node instance, and the label indicates that the node instance supports deployment of the first-type container service.

In a possible implementation, the method further includes: receiving third information, where the third information includes information about a first node instance, and the first node instance is a node instance to be added to the VNF; and sending, if a quantity of the first node instances is less than the maximum quantity, a second deployment request to the container as a service manager, where the second deployment request is for requesting to deploy the first-type container service on the first node instance.

In the foregoing implementation, if the VNF needs to add the first node instance, it is determined whether a priority of deploying the first-type container service on the newly added first node instance meets a second condition. If a quantity of the first node instances is less than a maximum quantity, it is determined that the first node instance can deploy the first-type container service, and the container as a service manager may be indicated to deploy the first-type container service on the first node instance. In this implementation, based on the maximum quantity, the first-type container service may be selectively deployed on the newly added first node instance, to adapt to a VNF scale-out or scale-in scenario.

In a possible implementation, the method further includes: sending a deletion request to the container as a service manager, if it is determined that the quantity of the at least one node instance is equal to the maximum quantity and a priority of deploying the first-type container service on the first node instance meets a second condition, where the deletion request is for requesting to delete the first-type container service deployed on some or all node instances in the at least one node instance, the second information further includes the first priority information, and the first priority information indicates the priority of deploying the first-type container service on the first node instance.

In a possible implementation, the second condition includes: The priority of deploying the first-type container service on the first node instance is higher than a priority of deploying the first-type container service on the some or all node instances in the at least one node instance.

In a possible implementation, the method further includes: sending a resource allocation request to a virtualized infrastructure manager VIM, where the resource allocation request is for requesting to allocate a resource to the one or more node instances; and
receiving resource information from the VIM, where the resource information indicates resources of the one or more node instances.

In addition, for technical effects brought by some implementations of the second aspect, refer to the description of technical effects of the first aspect or corresponding implementations.

According to a third aspect, an embodiment of this application provides a method for deploying a container service. The method may be performed by a container as a service manager, or may be performed by a communication apparatus or a chip system that has a container as a service manager function. The method includes: receiving a first deployment request, where the first deployment request is for requesting to deploy the container service of a first type on at least one node instance, the at least one node instance is a node instance whose priority of deploying the first-type container service meets a first priority condition, and/or a quantity of the at least one node instance is less than or equal to a maximum quantity, the at least one node instance is for instantiating a virtualized network function VNF, and the maximum quantity is a maximum quantity of node instances to be deployed for the first-type container service; and deploying the first-type container service on the at least one node instance.

In a possible implementation, the method further includes: receiving a first addition request, where the first addition request indicates that a label is added to the at least one node instance, and the label indicates that the node instance supports deployment of the first-type container service; and adding the label to the at least one node instance.

In a possible implementation, the method further includes: receiving a second deployment request, where the second deployment request is for requesting to deploy the container service on a first node instance, where the first node instance is a node instance to be added to the VNF; and deploying the first-type container service on the first node instance.

In a possible implementation, the method further includes: receiving a deletion request, where the deletion request is for requesting to delete the first-type container service deployed on the at least one node instance; and deleting the first-type container service deployed on the at least one node instance.

According to a fourth aspect, a method for deploying a container service is provided, including: A first network element receives first information, where the first information includes information about one or more node instances, the one or more node instances are for instantiating a virtualized network function VNF, and the first network element is a network function virtualization orchestrator NFVO or a network function virtualization manager VNFM; the first network element determines second information, where the second information includes first priority information, and the first priority information indicates one or more priorities of deploying a first-type container service on the one or more node instances; the first network element sends a first deployment request to a container as a service manager, where the first deployment request is for requesting to deploy the first-type container service on at least one node instance of the one or more node instances, and the at least one node instance is a node instance whose priority of deploying the first-type container service meets a first condition; and the container as a service manager deploys the first-type container service on the at least one node instance.

According to a fifth aspect, a method for deploying a container service is provided, including: a first network element receives first information, where the first information includes information about one or more node instances, and the one or more node instances are for instantiating a virtualized network function VNF; determines second information, where the second information includes a maximum quantity, where the maximum quantity is a maximum quantity of node instances to be deployed for a first-type container service; and sends a first deployment request to a container as a service manager, where the first deployment request is for requesting to deploy the first-type container service on at least one node instance of the one or more node instances, and a quantity of the at least one node instance is less than or equal to the maximum quantity; and the container as a service manager determines the first-type container service on the at least one node instance.

According to a sixth aspect, a communication apparatus is provided. The communication apparatus may be the first network element in the first aspect, or an electronic device (for example, a chip system) configured in the first network element, or a relatively large device including the first network element. The first network element includes a corresponding means (means) or module configured to perform the first aspect or any optional implementation. For example, the communication apparatus includes a processing module (also referred to as a processing unit sometimes) and a transceiver module (also referred to as a transceiver unit sometimes).

For example, the transceiver module is configured to receive first information, where the first information includes information about one or more node instances, and the one or more node instances are for instantiating a virtualized network function VNF. The processing module is configured to determine second information, where the second information includes first priority information, and the first priority information indicates one or more priorities of deploying a first-type container service on the one or more node instances. The transceiver module is configured to send a first deployment request to a container as a service manager, where the first deployment request is for requesting to deploy the first-type container service on at least one node instance of the one or more node instances, and the at least one node instance is a node instance whose priority of deploying the first-type container service meets a first condition.

According to a seventh aspect, a communication apparatus is provided. The communication apparatus may be the first network element in the second aspect, or an electronic device (for example, a chip system) configured in the first network element, or a relatively large device including the first network element. The first network element includes a corresponding means (means) or module configured to perform the first aspect or any optional implementation. For example, the communication apparatus includes a processing module (also referred to as a processing unit sometimes) and a transceiver module (also referred to as a transceiver unit sometimes).

For example, the transceiver module is configured to receive first information, where the first information includes information about one or more node instances, and the one or more node instances are for instantiating a virtualized network function VNF. The processing module is configured to determine second information, where the second information includes a maximum quantity, and the maximum quantity is a maximum quantity of node instances to be deployed for a first-type container service, where the transceiver module is configured to send a first deployment request to a container as a service manager, where the first deployment request is for requesting to deploy the first-type container service on at least one node instance of the one or more node instances, and a quantity of the at least one node instance is less than or equal to the maximum quantity.

According to an eighth aspect, a communication apparatus is provided. The communication apparatus may be the container as a service manager in the third aspect, or an electronic device (for example, a chip system) configured in the container as a service manager, or a relatively large device including the container as a service manager. The first network element includes a corresponding means (means) or module configured to perform the first aspect or any optional implementation. For example, the communication apparatus includes a processing module (also referred to as a processing unit sometimes) and a transceiver module (also referred to as a transceiver unit sometimes).

For example, the transceiver module is configured to receive a first deployment request, where the first deployment request is for requesting to deploy the container service of a first type on at least one node instance, the at least one node instance is a node instance whose priority of deploying the first-type container service meets a first priority condition, and/or a quantity of the at least one node instance is less than or equal to a maximum quantity, the at least one node instance is for instantiating a virtualized network function VNF, and the maximum quantity is a maximum quantity of node instances to be deployed for the first-type container service. The processing module is configured to deploy the first-type container service on the at least one node instance.

According to a ninth aspect, a communication system is provided. The communication system includes the communication apparatus according to the sixth aspect and the communication apparatus according to the eighth aspect; or the communication system includes the communication apparatus according to the seventh aspect and the communication apparatus according to the eighth aspect.

According to a tenth aspect, a communication apparatus is provided, including a processor and a memory. The memory is configured to store one or more computer programs, the one or more computer programs include computer-executable instructions, and when the communication apparatus runs, the processor executes the one or more computer programs stored in the memory, so that the communication apparatus implements the method according to any one of the first aspect, the second aspect, or the third aspect.

According to an eleventh aspect, a chip system is provided. The chip system includes a processor and an interface. The processor is configured to invoke instructions from the interface and run the instructions, and when the processor executes the instructions, the method according to any one of the first aspect, the second aspect, or the third aspect is implemented.

According to a twelfth aspect, a computer-readable storage medium is provided. The computer readable storage medium is configured to store a computer program, and when the computer program is run on a computer, the computer is enabled to perform the method according to any one of the first aspect, the second aspect, or the third aspect.

In addition, for technical effects brought by any one of the implementations of the third aspect to the twelfth aspect, refer to descriptions of technical effects of the first aspect, the second aspect, or the corresponding implementations.

### BRIEF DESCRIPTION OF DRAWINGS

FIG. 1A is a schematic diagram of a VNF architecture;
FIG. 1B is a schematic diagram of an architecture of a container management and orchestration system based on a CaaS technology;
FIG. 1C is a schematic diagram of a scenario to which an embodiment of this application is applicable;
FIG. 1D is a schematic diagram of an architecture of a communication system according to an embodiment of this application;
FIG. 2A and FIG. 2B are a schematic flowchart of a method for deploying a container service according to an embodiment of this application;
FIG. 3A is a schematic diagram of an instantiated VNF according to an embodiment of this application;
FIG. 3B is a schematic diagram of a VNF after scaling out according to an embodiment of this application;
FIG. 4A and FIG. 4B are a schematic flowchart of another method for deploying a container service according to an embodiment of this application;
FIG. 5 is a schematic diagram 1 of a structure of a communication apparatus according to an embodiment of this application;
FIG. 6 is a schematic diagram 2 of a structure of a communication apparatus according to an embodiment of this application;
FIG. 7 is a schematic diagram 3 of a structure of a communication apparatus according to an embodiment of this application;
FIG. 8 is a schematic diagram 4 of a structure of a communication apparatus according to an embodiment of this application;
FIG. 9 is a schematic diagram 5 of a structure of a communication apparatus according to an embodiment of this application; and
FIG. 10 is a schematic diagram 6 of a structure of a communication apparatus according to an embodiment of this application.

### DESCRIPTION OF EMBODIMENTS

To make the objectives, technical solutions, and advantages of embodiments of this application clearer, the following describes the technical solutions in embodiments of this application in detail with reference to the accompanying drawings of this specification and specific implementations.

The following explains technical terms in embodiments of this application.
1. A network element in embodiments of this application may be a single physical device, or may be an apparatus integrating a plurality of devices or nodes. A node may be understood as a group of devices that implement a function in a network, and the group of devices may be one or more devices, for example, a function such as a data forwarding function. Alternatively, the network element in embodiments of this application may be a logical concept, for example, a software module, or a network function corresponding to a service provided by each network element. The network function may be understood as a virtualization function in virtualization implementation, for example, unified data management (unified data management, UDM), a unified network controller (unified network controller, UNC), a unified policy control function (unified policy control, UPCF), a unified distributed gateway (unified distributed gateway), or a unified user center database (unified subscriber center database, USCDB).
2. A node instance in embodiments of this application is an instance to be created for instantiating a VNF. The node instance may be used for deploying a container service. One or more container services may be deployed on one node instance, and one container service may manage one or more containers. The node instance can be implemented by a virtual machine instance or a physical machine. In a virtualization technology, a physical machine may be virtualized by using a virtualization technology to obtain a VM instance. The VM instance may be understood as a result after a corresponding resource is configured for the VM. The resource is, for example, a computing resource and/or a storage resource. One virtual machine may be deployed on one physical machine, and a plurality of virtual machines may be respectively deployed on a plurality of physical machines or deployed on one physical machine. One or more container services can be deployed on one VM instance. The physical machine has corresponding resources. Therefore, the physical machine can be regarded as an instance, and one or more containers can be directly deployed on the physical machine. Physical machine is, for example, bare metal (bare metal).

In embodiments of this application, unless otherwise specified, a quantity of nouns represents "a singular noun or a plural noun", that is, "one or more". "At least one" means one or more, and "a plurality of" means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. A character "/" usually indicates an "or" relationship between the associated objects. For example, A/B indicates A or B. At least one of the following items (pieces) or a similar expression thereof refers to any combination of these items, including any combination of singular items (pieces) or plural items (pieces). For example, at least one of a, b, or c represents: a, b, c, a and b, a and c, b and c, or a, b and c, where a, b, and c may be in a single or may be plural form.

Unless otherwise specified, ordinal numbers such as "first" and "second" mentioned in embodiments of this application are used to distinguish a plurality of objects, and are not used to limit a sequence, a time sequence, a priority, or an importance degree of the plurality of objects. For example, "first deployment request" and "second deployment request" are merely used to represent two deployment requests, but do not imply that content, priorities, importance, sending or receiving sequences, and the like of the two deployment requests are necessarily different.

For ease of understanding, the following briefly describes the concept and architecture of NFV

### 1. NFV

NFV uses general-purpose hardware devices and virtualization technologies to carry functions of dedicated network devices, so as to reduce costs required for deploying the dedicated network devices. NFV decouples software from hardware, so that functions of network devices no longer depend on dedicated hardware. In addition, cloud computing features enable flexible resource sharing, thereby implementing rapid development and deployment of new services.

A network service implemented by using NFV is referred to as a network service (network service, NS). For example, the NS includes an Internet Protocol multimedia subsystem (Internet Protocol address multimedia subsystem, IMS) network service, or a core network service in a 5th generation mobile communication system (the 5th generation system, 5GS).

The NS includes several virtualized network functions (virtualized network functions, VNFs), that is, several VNFs implement one NS. A VNF corresponds to a PNF, for example, a virtualized packet core network (evolved packet core, EPC) node. The EPC node includes, for example, one or more of the following nodes: a mobility management entity (mobility management entity, MME), a serving gateway (serving gateway, SGW), a public data network gateway (public data network gateway, PGW), or the like. An NFV requirement is to expect that the VNF has the same function as the PNF.

### 2. NFV architecture

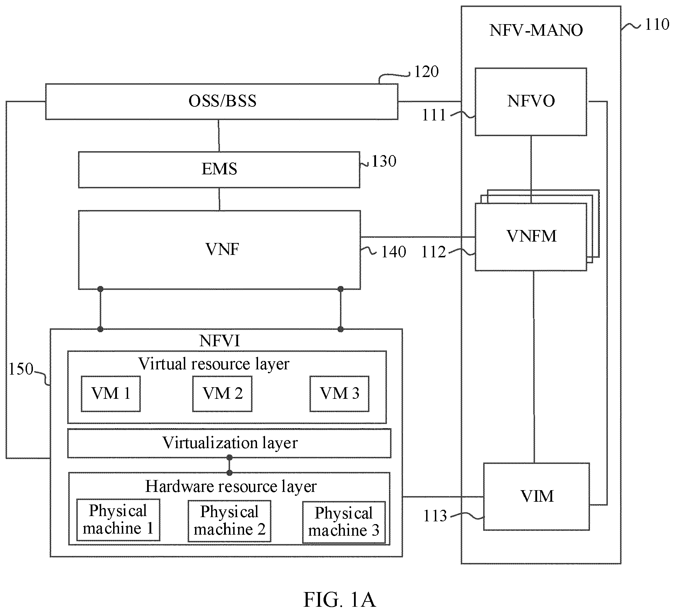

FIG. 1A is a schematic diagram of an NFV architecture. The architecture is, for example, an NFV architecture in which the CaaS technology is not introduced. The NFV architecture may include an NFV management and orchestration system (NFV management and orchestration system, NFV MANO) 110, one or more operation support systems/business support systems (operation support systems/business support systems, OSSs/BSSs) 120, a plurality of element management systems (element manager systems, EMSs) 130, a plurality of VNFs 140, and an NFV infrastructure (NFV infrastructure, NFVI) 150.

The NFV MANO 110 is responsible for management and orchestration of an entire NFVI resource. The NFV MANO 110 includes an NFV orchestrator (NFV orchestrator, NFVO) 111, one or more VNFMs 112, and a virtualized infrastructure manager (virtualized infrastructure manager, VIM) 113. The NFVO 111 is configured to manage NS description information (which may also be referred to as a network service descriptor (network service descriptor, NSD)) and a virtualized network function forwarding graph (VNF forwarding graph, VNFFG), manage a life cycle of the NS, and cooperate with the VNFM 112 to implement life cycle management of the VNF and a global view function of a virtual resource. The global view function may be understood as displaying a corresponding virtual resource in graphics. The VNF life cycle management includes management of a virtualized network function descriptor (VNF descriptor, VNFD), VNF instantiation, elastic scaling (including scaling out/up (scaling out/up) and scaling in/down (scaling in/down)) of the node instance, healing (healing) of the node instance, termination of the node instance, and the like. The VNFM 112 further supports receiving a flexible scaling (scaling) policy from the NFVO 111, to implement VNF flexible scaling automation. The VIM 113 is mainly responsible for management of a hardware (hardware) resource in an infrastructure layer and a virtualized resource, for example, reserving and allocating the virtualized resource, monitoring a status of the virtual resource and reporting a fault, and providing a virtualized resource pool for an upper-layer application. For example, the VIM 113 is configured to control and manage interaction between the VNF 140 and a virtual resource in the NFVI, and/or interaction between the VNF and a hardware resource in the NFVI. Alternatively, for example, the VIM 113 may be configured to perform an operation of allocating a virtual resource or a hardware resource to the VNF 140.

The OSS/BSS 120 is mainly oriented to telecommunications service providers, and provides integrated network management and service operation functions, the network management, such as fault monitoring and network information collection, and the service operation functions, such as charging management and customer service management.

The EMS 130 is configured to perform conventional functions of fault management, configuration management, account management, performance management, and security management (fault management, configuration management, account management, performance management, security management, FCAPS) for the VNF.

The VNF 140 may run a corresponding application (application, APP) (not shown in FIG. 1A), and provide a corresponding service for a user through the corresponding application.

The NFVI 150 may include a virtual resource layer, a virtualization layer, and a hardware resource layer. The virtual resource layer may include a plurality of VM instances, or the virtual resource layer may further include virtual storage, a virtual network, and the like (not shown in FIG. 1A). The hardware resource layer may include computing hardware, storage hardware, network hardware (not shown in FIG. 1A), and the like.

The virtual resource layer may be configured to provide the virtual resource in a form of a VM, for example, one or more node instances form one VNF 140. The virtualization layer forms a virtual network by using hardware in the virtualized hardware resource layer, and the plurality of VM instances may communicate with each other through the virtual network. The virtual network is, for example, a virtual local area network (virtual local area network, VLAN), a virtual private local area network service (virtual private LAN service, VPLS), a virtual extensible local area network (virtual extensible local area network, VXLAN), or generic routing encapsulation network virtualization (network virtualization using generic routing encapsulation, NVGRE).

The hardware resource layer may provide hardware resources in a form of a physical machine. The hardware in the hardware resource layer may include one or more of the following: a dedicated processor, a general-purpose processor configured to provide processing and computing functions, a device configured to provide a storage capability, and a device configured to provide a network communication function. The dedicated processor is, for example, a central processing unit (central processing unit, CPU). The device configured to provide a storage capability is, for example, a disk or network attached storage (network attached storage, NAS). The device configured to provide a network communication function is, for example, a switch, a router, and/or another network device.

The following describes the CaaS technology in a containerization technology.

In the CaaS technology, different processes in an operating system are isolated by a virtualization technology, and a corresponding service is implemented using one or more processes. The virtualization technology includes, for example, a control group (control group, CGroup) mechanism and/or a namespace (name space) mechanism in a Linux operating system. A management object involved in the CaaS technology is a process, so as to implement lightweight and simplified management.

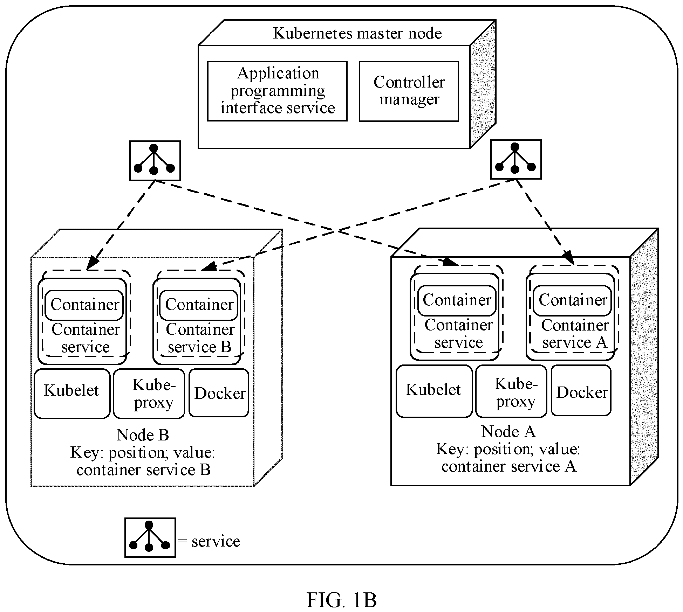

FIG. 1B is a schematic diagram of an architecture of a container management and orchestration system based on a CaaS technology. FIG. 1B may also be understood as a schematic diagram of an architecture of a container management and orchestration system implemented based on a Kubernetes (K8S for short) technology. For brevity of description, a container management and orchestration system implemented based on the K8S technology may be referred to as a K8S system for short.

As shown in FIG. 1B, the K8S system includes one or more clusters. Each cluster includes a K8S master node (master node) and a group of slave nodes, where a slave node may also be referred to as a worker node. Each cluster also includes a service (service), and the service may serve as an entry for an external node to access each worker node.

A group of processes runs on the master node, and the group of processes includes, for example, an application programming interface service (application programming interface server, API server) and a control manager (controller manager). The control manager includes a replication controller (replication controller, RC). The group of processes in the master node is responsible for managing the cluster. For example, the group of processes may be used to manage resources in the cluster, schedule a container service (for example, a pod (pod)) in the cluster, elastically scale the container service in the cluster, control security of the cluster, monitor the cluster, and correct an error that occurs in the cluster.

Each worker node may be implemented using a node instance deployed in a cluster. Each worker node can run three components: kubelet, proxy (proxy), and docker (docker). Each worker node manages a life cycle of a container service on the worker node and implements a service agent function. The service agent function includes proxy for communication between the container service on a current worker node and another worker node. One or more container services are deployed on each worker node. The container service is a minimum deployment unit of the K8S system. FIG. 1B is used as an example. A container service A is deployed on a worker node A, and a container service B is deployed on a worker node B.

The following briefly describes functions of components in the K8S system.
1. An application programming interface service provides a resource operation entry. For example, other components in the K8S system operate resources through API interfaces provided by the application programming interface service. The application programming interface service can query all resources in a cluster and monitor resource changes in the cluster to assist other components in the K8S system to implement corresponding service functions.
2. The control manager is a management and control center of the cluster, and mainly implements fault detection and automatic recovery of the K8S cluster. For example, the control manager may implement replication or removal of the container service based on a definition of the replication controller, to ensure that the container service conforms with the definition of the replication controller. In addition, based on a management relationship between a service (service) and a container service, creation and update of an endpoint (endpoint) object of the service, discovery of a worker node, management and status monitoring of the worker node, and clearing of a locally cached image file may further be completed.
3. The kubelet component is responsible for full-service life-cycle management of the container service on the local worker node, including creating, modifying, monitoring, and deleting container services. In addition, the kubelet component periodically reports status information about the current worker node to the application programming interface service.
4. The proxy component is configured to implement load balancing between service proxy and software mode.
5. The docker component provides an environment for container running.

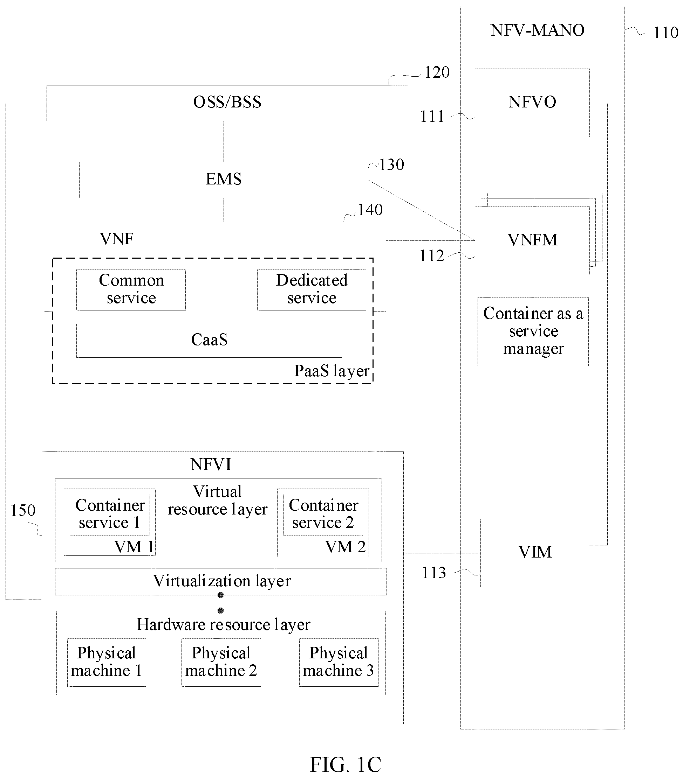

With the continuous development of virtualization technologies, it is proposed that the CaaS technology is integrated into the NFV architecture. Currently, an NFV architecture is defined. For the NFV architecture, refer to FIG. 1C. FIG. 1C may also be understood as a schematic diagram of an application scenario to which an embodiment of this application is applicable.

In FIG. 1C, a management entity, that is, a container as a service manager (container as a service manager, CaaS Mgt), is added to an NFV MANO in the NFV architecture. The container as a service manager undertakes a function of a CaaS management plane, and the container as a service manager is configured to manage life cycles of a plurality of container services in the VNF 140. For functions of the container as a service manager, refer to functions of the master node in the K8S system. A platform as a service (platform as a service, PaaS) layer is added between the VNF 140 and the NFVI 150. A sublayer of the PaaS is a CaaS, and the CaaS may be understood as a CaaS user plane. In addition to the CaaS, the PaaS layer further includes a dedicated service (dedicated service), a common service (common service), and the like in the NFV architecture. In addition, one or more container services may be deployed on a virtual machine in the NFVI, and/or one or more container services may be deployed on a physical machine in the NFVI. FIG. 1C is used as an example. A container service 1 may be deployed on a virtual machine instance VM 1, and a container service 2 may be deployed on a virtual machine instance VM 2.

Embodiments of this application provide a technical solution. In this technical solution, a node instance for deploying a container service of a type (for example, a first type) may be determined based on a priority of the node instance, and a mechanism for deploying a container service is provided. In addition, in this technical solution, when a container service of a specific type (for example, the first type) is deployed, some node instances whose priorities do not meet the first condition may be excluded, to flexibly adjust a quantity of node instances for deploying the first-type container service. In this way, excessive container services can be prevented from being deployed on excessive node instances.

The following describes the technical solution provided in embodiments of this application with reference to the accompanying drawings.

An embodiment of this application provides a method for deploying a container service. The method may be performed by a communication system, and is specifically performed by a first network element and a container as a service manager in the communication system. The first network element is, for example, a VNFM or an NFVO. The method may be specifically performed by a communication apparatus or a chip system having a function of a first network element, and by a communication apparatus or a chip system having a function of a container as a service manager. The communication apparatus having a function of a first network element includes a communication apparatus having a VNFM function or a communication apparatus having an NFVO function. The chip system having a function of a first network element includes a chip system having a VNFM function, or a chip system having an NFVO function.

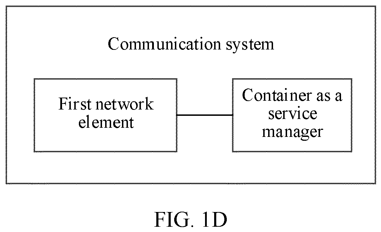

FIG. 1D is a schematic diagram of a structure of a communication system according to an embodiment of this application. As shown in FIG. 1D, the communication system includes a first network element and a container as a service manager. For specific implementations of the first network element and the container as a service manager, refer to the foregoing content.

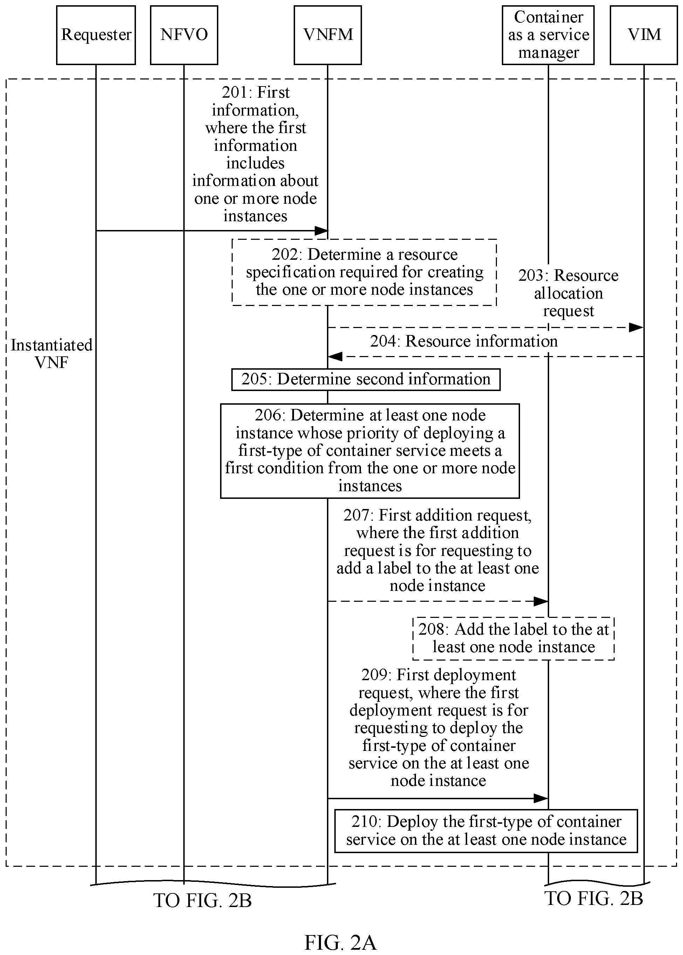

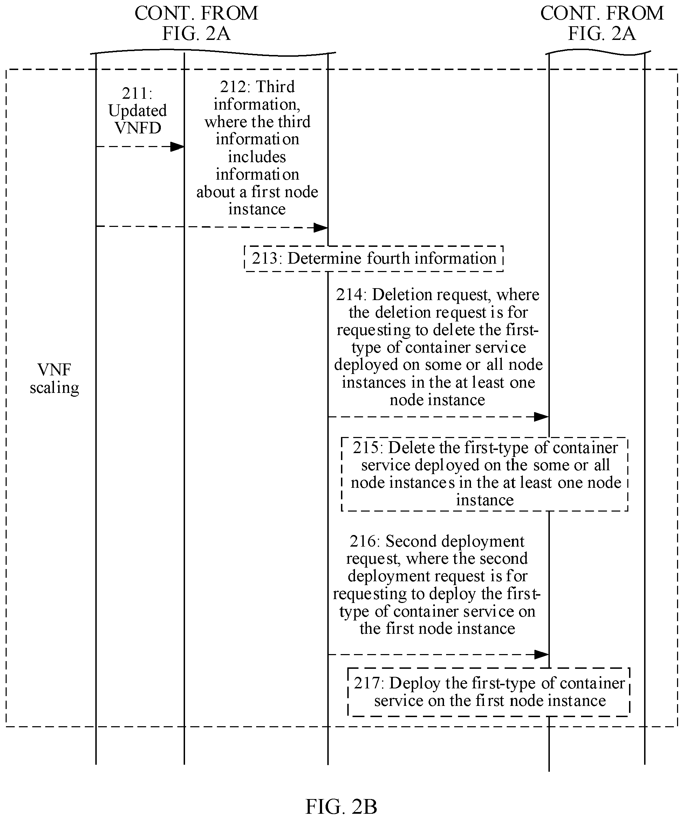

FIG. 2A and FIG. 2B are a flowchart of the method. In a description process of FIG. 2A and FIG. 2B, an example in which the method is applied to the NFV architecture shown in FIG. 1C, the first network element is a VNFM, and the communication system is the communication system shown in FIG. 1D is used.

Step 201: A requester sends first information to a VNFM, where the first information includes information about one or more node instances. Correspondingly, the VNFM receives the first information from the requester. The one or more node instances are node instances to be created for instantiating a VNF.

During VNF instantiation, the requester may configure the first information based on the node instance required for instantiating the VNF, and then send the first information to the VNFM. Optionally, the first information may be carried in an instantiation request, and the instantiation request is for requesting to instantiate the VNF. That the VNFM receives the instantiation request is equivalent to that the VNFM receives the first information. In addition, the instantiation request may further include other information, for example, include an identifier of the VNF, to indicate the VNF that currently needs to be instantiated. Alternatively, the first information may be sent through another message, for example, through a dedicated message.

The requester is, for example, a user, or another network element other than the first network element in the VNF architecture shown in FIG. 1C. The another network element is, for example, a VNFM, an NFVO, an EM, or the like. For example, a requester is a user, and the VNFM may provide an operation interface for the user. The user performs a configuration operation on the operation interface. Submitting the operation by the user is equivalent to sending the first information to the VNFM. In this case, the VNFM may obtain the first information, which may be equivalent to receiving the first information by the VNFM.

The first information includes information about one or more node instances, and the information about the one or more node instances includes a quantity of node instances of each type in the at least one type and type information about node instances of each type in the at least one type. The at least one type refers to all types to which one or more node instances belong. The type information about the node instance indicates a type of the node instance. For example, the node instance is a virtual machine instance, and one VM-A type of node instance and a VM-B type of two node instances are required for instantiating the VNF. In this case, the first information may include information about two types of node instances, and the two types of node instances are respectively VM-A and VM-B. There are two pieces of information about the VM-A type of the node instance, and there is one piece of information about the VM-B type of node instance.

For example, types of node instances may be classified based on resource specifications of the node instances. If resource specifications of two node instances are different, types of the two node instances are different. The resource specification includes a resource type required for creating the node instance and/or a quantity of resources corresponding to each resource type required for creating the node instance. The resource type includes, for example, a central processing unit (central processing unit, CPU), a memory, bandwidth, and storage. For example, if the resource type is CPU, the corresponding resource quantity includes a quantity of CPUs required for creating the node instance, and the like. That resource specifications of the two node instances are different may be understood as that resource types required for creating the two node instances are different, and/or resource quantities corresponding to the resource types required for creating the two node instances are different. Creating one node instance may require one or more resource types. Therefore, resource types required for creating two node instances are different, which may be understood as that the resource types required for creating the two node instances are partially or completely different. For example, the resource type required for creating the VM-A type of node instance includes a CPU, bandwidth, and a memory, and a resource type required for creating the VM-B type of node instance includes a CPU, bandwidth, and storage. In this case, it is considered that resource types required for creating the two node instances are partially different. Similarly, creating one node instance may require one or more resource types. Therefore, resource types required for creating two node instances correspond to different quantities of resources. It may be understood that at least one resource type in the resource types required for creating the two node instances corresponds to different quantities of resources. For example, two CPUs are required for creating a VM-A type of node instance, and three CPUs are required for creating a VM-B type of node instance. In this case, it is considered that a quantity corresponding to one resource type in resource types required for creating the two node instances is different. Certainly, types of VMs may alternatively be classified in another manner. This is not limited in this embodiment of this application.

Step 202: The VNFM determines a resource specification required for creating one or more node instances.

The VNFM determines the resource specification required for creating the one or more node instances based on the first information. A sum of the resource specification of the one or more node instances may be understood as the resource specification required for creating the node instance required for instantiating the VNF. For example, the first information includes a VM-A type of two node instances and a VM-B type of one node instance. The VNFM determines that two CPUs are required for creating one VM-A instance, and three CPUs are required for creating one VM-B instance. In other words, the VNFM determines that five CPUs are required for creating five node instances.

For example, the VNFM may parse the VNFD, to determine the resource specification required for creating each of the one or more node instances from the VNFD. The VNFD may be preconfigured in the NFVO. For example, the VNFM may send a first request to the NFVO, where the first request is for requesting the VNFD. Correspondingly, the NFVO receives the VNFD from the VNFM. The NFVO sends the VNFD to the VNFM. Correspondingly, the VNFM receives the VNFD from the NFVO. The VNFM parses the VNFD, to obtain the resource specification required by each of the one or more node instances. The VNFD may include resource specifications required by node instances of various types.

Alternatively, the VNFM may send a second request to the NFVO, where the second request is for requesting to create the resource specification required for creating the one or more node instances. Correspondingly, the NFVO receives the second request from the VNFM, and the NFVO parses the VNFD, to obtain the resource specification required for creating the one or more node instances, and sends resource specification information to the NFVO, where the resource specification information indicates the resource specification required for creating the one or more node instances. Correspondingly, the VNFM receives the resource specification information from the NFVO, to determine the resource specification for creating the one or more node instances.

In this embodiment of this application, because the VNFD includes resource specifications required by node instances of various types, when any VNF is instantiated, a same VNFD may be used to determine the resource specifications of the node instances. In other words, the VNFD may be common to all VNFs. In this way, there is no need to configure a corresponding VNFD for each VNF, thereby reducing a quantity of VNFDs, and further reducing workload of configuring and managing the VNFD.

Step 203: The VNFM sends a resource allocation request to the VIM. Correspondingly, the VIM receives the resource allocation request from the VNFM.

The VNFM may generate the resource allocation request based on the resource specification of the one or more node instances. The resource allocation request is for requesting a resource required for creating one or more node instances from the VIM. The resource allocation request may include information about the resource specification required for creating one or more node instances.

Step 204: The VIM sends resource information to the VNFM. The resource information indicates a resource corresponding to the one or more node instances. Correspondingly, the VNFM receives the resource information from the VIM.

Resource information about each node instance may be preconfigured in the VIM. After receiving the resource allocation request, the VIM determines resource information for creating the one or more node instances, and sends the resource information about the one or more node instances to the VNFM. The resource information includes, for example, an identifier of each of one or more node instances. The identifier of the node instance is, for example, an address of the node instance, for example, an Internet Protocol (Internet Protocol, IP) address of the node instance.

Alternatively, the resource information may be sent by the NFVI to the VIM, and the VIM receives the resource information from the NFVI. For example, the VIM may send invocation information to the NFVI, where the invocation information includes information for requesting to create the resource specification required by the one or more node instances. After receiving the invocation information, the NFVI may determine the resource information about the one or more node instances. The NFVI sends the resource information to the VIM. After receiving the resource information, the VIM may send the resource information to the VNFM.

Step 202 to step 204 are an example of a manner of creating a node instance. Certainly, there are other manners of creating the node instance, and the manners are not listed one by one in this embodiment of this application.

Step 205: The VNFM determines second information. The second information includes, for example, first priority information, and the first priority information may indicate a priority of deploying the first-type container service on one or more node instances.

For example, types of container services may be classified based on functions implemented by the container services. For example, a type of a container service for implementing an operation and maintenance function is classified into an operation and maintenance type, and a type of a container service for implementing a management function is classified into a management type. For example, the container service is a pod. The types of the container service include a network element life cycle management container service (life cycle-manager-pod, Life cycle-mng-pod), a network element reliability management container service (high availability-manager-pod, Ha-Mng-Pod), a container as a service agent (CaaS agent), and an operation and maintenance-type management container service (operation maintenance-pod, O&M-Pod). The life cycle-mng-Pod is used for managing a life cycle of a container. The Ha-Mng-Pod is used for managing container reliability, for example, detecting container exceptions. The O&M-Pod is used for performing O&M on containers. The CaaS agent is an agent deployed on a node instance, for managing life cycles of pods.

Certainly, types of container services may alternatively be classified in another manner. This is not limited in this embodiment of this application.

The first-type container service is any one of one or more types of container services. The one or more types of container services are, for example, a management type and an O&M type. Deployment processes of different types of container services are similar. Therefore, in this embodiment of this application, deployment of the first-type container service is used as an example.

The second information may be policy information for determining, in the one or more node instances, a node instance for deploying the first-type container service. Subsequently, when the first-type container service is deployed, the container service may be deployed based on the second information. The second information may include different content. The following describes the content that may be included in the second information.
1. The second information includes the first priority information.

The first priority information indicates the priority of deploying the first-type container service on the one or more node instances. If priorities of deploying the first-type container service on a same type of node instances are different, the first priority information includes a priority of deploying the first-type container service on each of one or more node instances. If priorities of deploying the first-type container service on a same type of node instances are the same, the first priority information includes a priority of deploying the first-type container service on each type of node instance of the at least one type, and the at least one type refers to all types to which one or more VM instances belong.

The first priority information may be represented in a plurality of manners. For example, the first priority information may be represented by using a plurality of values. For example, a priority of deploying the first-type container service on the node instance may be represented in a form of a number, for example, a priority is 1, 2, 3.... A smaller priority value indicates a higher priority of deploying the first-type container service. Correspondingly, the first priority information may be specifically represented as 1, 2, 3.... For brevity of description, a priority of deploying the first-type container service by the node instance in the following may be referred to as a priority of the node instance for short.

It should be noted that the first priority information may indicate a priority of each of the one or more node instances, but does not indicate that all the node instances in the one or more node instances definitely support deployment of the first-type container service. When a node instance does not support deployment of the first-type container service, a priority of the node instance may indicate that the node instance does not support deployment of the first-type container service, and the priority of the node instance may be represented as a first preset priority. In other words, if a priority of a node instance is the first preset priority, it indicates that the node instance does not support deployment of the first-type container service. Alternatively, when a node instance does not support deployment of the first-type container service, the first priority information may not indicate a priority of the node instance. In this case, by default, the node instance does not support deployment of the first-type container service. For example, the one or more node instances include a VM-A-01 and a VM-B-01, the VM-A-01 does not support deployment of the first-type container service, and a priority of deploying the first-type container service on the VM-B-01 is 1. Correspondingly, the first priority information may indicate that the priority of the VM-B-01 is 1.

The priority of the node instance may be preconfigured by the requester or the NFVO.

In an example, a priority of deploying each type of container service on the node instance may be preconfigured based on the resource quantity of the node instance. For example, a larger resource quantity of a node instance indicates a higher priority of deploying each type of container service on the node instance. A resource quantity of a node instance may include a total quantity of resources corresponding to various resource types required for creating the node instance, or include a total quantity of resources corresponding to a specific resource type required for creating the node instance. For a specific resource type, for example, a CPU, two CPUs are required for creating a VM-A type of node instance, and three CPUs are required for creating a VM-B type of node instance, therefore, the NFVO may configure a priority of deploying each type of container service for the VM-B type of node instance to be higher than a priority of deploying each type of container service for the VM-A type. In this example, a corresponding container service is preferentially deployed on a node instance with a large resource quantity, so that the container service has sufficient resources to process a service.

Priorities of deploying a same type of container services on a same type of different node instances may be the same or different. Optionally, priorities of deploying the first-type container service on a same type of two node instances may be different. For example, priorities of deploying the first-type container service on the VM-A type of VM-A-01 and VM-A-02 may be different. Alternatively, priorities of deploying the first-type container service on a same type of node instances may be the same. In this way, a priority of deploying the first-type container service may be preconfigured for the node instances based on a type of the node instances, so that the priority of deploying the first-type container service does not need to be preconfigured for each node instance, and a process of preconfiguring the priority of deploying the first-type container service for the node instances is simplified.

Priorities of deploying different types of container services on the same type of node instances may be the same or different. Optionally, priorities of deploying different types of container services on the same type of node instances may be different. For example, a priority of deploying the Ha-Mng-Pod on the VM-A type of VM-A-0 1 is different from a priority of deploying the O&M-Pod on the VM-A-01. If the priorities of deploying the different types of container services on the same type of node instances are different, and the priorities of deploying the same type of container services on the same type of node instances are the same, it is likely that different types of container services are deployed on different types of node instances in a distributed manner, so as to avoid that different types of container services are deployed on a node instance of a specific type in a centralized manner, thereby improving appropriateness of deploying container services. If the priorities of deploying different types of container services on a same type of node instances are different, and the priorities of deploying the same type of container services on the same type of node instances are different, it indicates that it is relatively likely that different types of container services are deployed on the different node instances in a distributed manner, so as to avoid different types of container services are deployed on a node instance in a centralized manner.

2. The second information includes the first priority information and a maximum quantity.

For description of the first priority information, refer to the foregoing description.

Because a quantity of node instances to be deployed for the first-type container service may be limited, to avoid deploying the first-type container service on an excessive quantity of node instances, optionally, the second information in this embodiment of this application may further include the maximum quantity. The maximum quantity is a maximum quantity of node instances to be deployed for the first-type container service. In this way, when the first-type container service is subsequently deployed, the first-type container service may be deployed on a corresponding node instance based on the maximum quantity, thereby reducing a waste of node instance resources caused by excessive deployment of the first-type container service. For example, if all the VM-A-01, VM-A-02, VM-B-01, and VM-B-02 support deployment of the O&M-Pod, a priority of deploying the O&M-Pod on the VM-B type of VM instance is higher than that of the VM-A type of VM instance, and a maximum quantity corresponding to the O&M-Pod is 2, correspondingly, the O&M-Pod may be deployed on the VM-B-01 and the VM-B-02.

After the content included in the second information is described, the following describes how the first network element determines the second information by using an example.

Manner 1: The VNFM determines the second information based on the VNFD.

The VNFD includes the type information about a node instance, type information about a container service that can be deployed on each type of node instance, and priority information about one or more types of container services deployed on each type of node instance. If the priorities of deploying the first-type container service on a same type of different node instances are the same, priority information about deploying one or more types of container services on each type of node instance indicates priorities of deploying the one or more types of container services on the node instance of the type. For example, the priority information about deploying the one or more types of container services on each type of node instance includes a type identifier of each type of node instance, and a priority of deploying the one or more types of container services on each type of node instance.

If the priorities of deploying the first-type container service on a same type of different node instances are different, the priority information about deploying one or more types of container services on each type of node instance indicates priority information about deploying the one or more types of container services on each of node instances of the type. For example, the priority information about deploying the one or more types of container services on each type of node instance includes an identifier of each node instance, and a priority of deploying the one or more types of container services on each node instance.

For example, the VNFD includes that a type identifier of the VM-A type of the node instance is VM-A, type information about the container service that is supported by the VM-A type of the node instance for deployment is O&M-Pod, priority information about deploying the O&M-Pod on the VM-A type of instance node is 2, and a maximum quantity corresponding to the O&M-Pod is 2. The VNFD further includes that the type identifier of the VM-B type of node instance is the VM-B, the type information about the container service that is supported by the VM-B type of node instance for deployment is the O&M-Pod, the priority information about deploying the O&M-Pod on the VM-B is 1, and the maximum quantity corresponding to the O&M-Pod is 2. The VNFD further includes O&M-Pod information, including O&M-Pod type information, where the O&M-Pod type information is O&M-Pod.

If the priorities of deploying the first-type container service on a same type of different node instances are the same, the VNFM may determine a priority of deploying the first-type container service on each of the one or more node instances from the VNFD based on type information about one or more instances, to determine the first priority information. For example, the one or more node instances include a VM-A-01 belonging to the VM-A type, and a VM-B-01 and a VM-B-02 belonging to the VM-B type. Correspondingly, the second priority information may include a priority of deploying the first-type container service on the node instance belonging to the VM-A type, and a priority of deploying the first-type container service on the node instance belonging to the VM-B type.

Alternatively, if the priorities of deploying the first-type container service on a same type of different node instances are different, the VNFM may determine the priority of deploying the first-type container service on each node instance from the VNFD based on an identifier corresponding to each VM instance in the resource information, to determine the first priority information. For example, the one or more node instances include the VM-A type of VM-A-0 1, and the VM-B type of VM-B-01 and VM-B-02. Correspondingly, the second priority information in the second information may include a priority of deploying the first-type container service on the VM-A-01, a priority of deploying the first-type container service on the VM-B-01, and a priority of deploying the first-type container service on the VM-B-02.

The VNFD may include type information about a container service that is supported by each type of node instance for deployment. Therefore, the VNFD may be commonly used to determine second information corresponding to any VNF, thereby reducing a quantity of VNFDs to be preconfigured.

In an example, the VNFD may further include the maximum quantity corresponding to each type of container service. For a meaning of the maximum quantity, refer to the foregoing description. The VNFM may determine the maximum quantity corresponding to the first-type container service based on the VNFD.

Manner 2: The VNFM receives the second information from another network element.

The another network element may alternatively determine the second information based on the VNFD, or may determine the second information in another manner. For example, the another network element is an NFVO. The NFVO determines the second information based on the VNFD, and sends the second information to the VNFM. The VNFM receives the second information.

Step 206: The VNFM determines at least one node instance whose priority of deploying the first-type container service meets the first condition from the one or more node instances.

The first condition may be implemented in different manners. The following provides an example for description.

A. The first condition includes that the priority of deploying the first-type container service is higher than or equal to a preset priority.

The VNFM may determine, from one or more node instances, a node instance whose priority of deploying the first-type container service is higher than or equal to a second preset priority as at least one node instance, so that the first-type container service is subsequently deployed on a node instance with a higher priority. The second preset priority is an example of the preset priority. To facilitate differentiation from the first preset priority described above, the second preset priority is referred to as the second preset priority herein. The second preset priority is higher than the foregoing first preset priority. The second preset priority may be preconfigured in the VNFM or specified in a protocol.

For example, the one or more node instances include the VM-A type of VM-A-01 and VM-A-02, and the VM-B type of VM-B-01. Priorities of deploying the first-type container service on the VM-A-01 and the VM-A-02 are both 1, and a priority of deploying the first-type container service on the VM-B-01 is 2. A larger value of the priority indicates a lower priority of deploying the first-type container service. If the preset priority is 1, the VNFM determines that the VM-A-01 and the VM-A-02 belong to the at least one node instance, and the VM-B-01 does not belong to the at least one node instance.

B. The first condition includes that a sequence number of the priority of deploying the first-type container service is less than or equal to N, where N is a positive integer. The sequence number of the priority is obtained by sorting the priorities of deploying the first-type container service on the one or more node instances based on a preset sequence.

The VNFM may sort the priorities of deploying the first-type container service on one or more node instances based on a preset sequence, to obtain a sequence number of the priority of deploying the first-type container service for each node instance. The preset sequence is, for example, a descending order of the priorities of deploying the first-type container services. The VNFM may determine a node instance whose sequence number is less than or equal to N as the at least one node instance based on the sequence number of the priority of deploying the first-type container service on one or more node instances. Optionally, N may be preconfigured in the VNFM, or may be specified in a protocol.

When the preset sequence is a descending order of the priorities of deploying the first-type container service, a smaller sequence number of the node instance indicates a higher priority of deploying the first-type container service on the node instance. Filtering a node instance whose sequence number is less than or equal to N is equivalent to filtering out a node instance with a relatively high priority for deploying the first-type container service.

For example, the one or more node instances include the VM-A type of VM-A-01, VM-A-02, and VM-A-03, the VM-B type of VM-B-01 and VM-B-02, and a VM-C type of VM-C-01 and VM-C-02. Priorities of deploying the first-type container service on the VM-A-01, the VM-A-02, and the VM-A-03 are all 1, priorities of deploying the first-type container service on the VM-B-01 and the VM-B-02 are both 2, and priorities of deploying the first-type container service on the VM-C-01 and the VM-C-02 are both 3. A larger value of the priority indicates a lower priority of deploying the first-type container service. For example, if N is 2, the VNFM determines that the VM-A-01, VM-A-02, VM-A-03, VM-B-01, and the VM-B-02 belong to the at least one node instance, and the VM-C-01 and the VM-C-02 do not belong to the at least one node instance.

In addition to the foregoing two implementations, the first condition may be implemented in another manner. This is not limited in this embodiment of this application.

If the second information further includes the maximum quantity, optionally, the priority of deploying the first-type container service on the at least one node instance needs to meet the first condition, and the quantity of the at least one node instance needs to be less than or equal to the maximum quantity.

For example, in one or more node instances, if a quantity of the node instances whose priority of deploying the first-type container service is less than or equal to the maximum quantity, the quantity of the node instances whose priority of deploying the first-type container service may be determined as a quantity of at least one node. In one or more node instances, if a quantity of node instances whose priority of deploying the first-type container service meets the first condition is greater than the maximum quantity, that is, a quantity of at least one node instance is greater than the maximum quantity, the VNFM may randomly select a maximum quantity of VM instances from the at least one node instance. In this case, at least one VM example described below may be replaced with the maximum quantity of node instances herein. Alternatively, the VNFM may select a maximum quantity of node instances from the at least one node instance in descending order of priorities of deploying the first-type container service. In this case, at least one VM example described below may be replaced with the maximum quantity of node instances herein. In this embodiment of this application, an example in which a quantity of at least one node instance is less than or equal to the maximum quantity is used.

Step 207: The VNFM sends a first addition request to the container as a service manager, where the first addition request is for requesting to add a label to the at least one node instance. Correspondingly, the container as a service manager receives the first addition request from the VNFM.

The container as a service manager is, for example, the container as a service manager shown in FIG. 1C. The container as a service manager can use a label mechanism to deploy container services. The label mechanism means that the container as a service manager determines, based on a label on a node instance, which type of container service is to be deployed on the node instance. In this case, the VNFM may send the first addition request to the container as a service manager.

The first addition request is used for the container as a service manager to add a label to each of the at least one node instance. The label on each node instance indicates that the first-type container service can be deployed on the node instance. Optionally, the first addition request includes an identifier of each of the at least one node instance and a type identifier of the first-type container service that is supported by each node instance for deployment. For example, if the at least one node instance includes a VM-A-01 and a VM-A-02, and the first-type container service is an O&M-Pod, the first addition request includes the VM-A-01, the VM-A-02, and the O&M-Pod.

Step 208: The container as a service manager adds a label to the at least one node instance.

The container as a service manager may add a label to each of the at least one node instance based on the first addition request.

In an embodiment, step 207 and step 208 are optional parts. For example, the container as a service manager may not deploy a container service by using the label mechanism. In this case, step 207 and step 208 do not need to be performed.

Step 209: The VNFM sends a first deployment request to the container as a service manager, where the first deployment request is for requesting to deploy the first-type container service on the at least one node instance. Correspondingly, the container as a service manager receives the first deployment request from the VNFM.

For example, the first deployment request includes the identifier of each of the at least one node instance. Alternatively, the first deployment request further includes the identifier of the first-type container service that is supported by each node instance in the at least one node instance for deployment.

Step 210: The container as a service manager deploys the first-type container service on the at least one node instance.

If the first deployment request includes the identifier of each of the at least one node instance, the container as a service manager may deploy the first-type container service on the at least one node instance based on the identifier of each of the at least one node instance. For example, when step 207 and step 208 are performed, the container as a service manager may determine, based on the first deployment request, at least one node instance on which the container service needs to be deployed, and deploy the first-type container service on each of the at least one node instance based on the label on each of the at least one node instance. Certainly, one or more first-type container services may be deployed on each node instance. A quantity of deployed first-type container services is not limited in this application.

If the first deployment request may include the identifier of each of the at least one node instance and the identifier of the first-type container service that is supported by each of the at least one node instance for deployment, the container as a service manager may deploy the first-type container service on the at least one node instance based on the first deployment request. For example, when step 207 and step 208 are not performed, the container as a service manager may deploy the first-type container service on the at least one node instance based on the first deployment request.

The following describes a process of deploying the first-type container service by using an example.

For example, the one or more node instances include the VM-A type of VM-A-01 and VM-A-02, and the VM-B type of VM-B-01, and the first-type container service is Ha-Mng-Pod. All the VM-A-01, VM-A-02, and VM-B-01 support Ha-Mng-Pod deployment.

The VNFM determines that the priorities of deploying the Ha-Mng-Pod on the VM-A-01 and the VM-A-02 meet the first condition, and the priority of the VM-B-01 does not meet the first condition. The VNFM may send the first deployment request to the container as a service manager, where the first deployment request indicates deploying the Ha-Mng-Pod on the VM-A-01 and the VM-A-02. Correspondingly, after receiving the first deployment request, the container as a service manager deploys the Ha-Mng-Pod-01 belonging to the Ha-Mng-Pod on the VM-A-01, and separately deploys the Ha-Mng-Pod-02 belonging to the Ha-Mng-Pod on the VM-A-02.

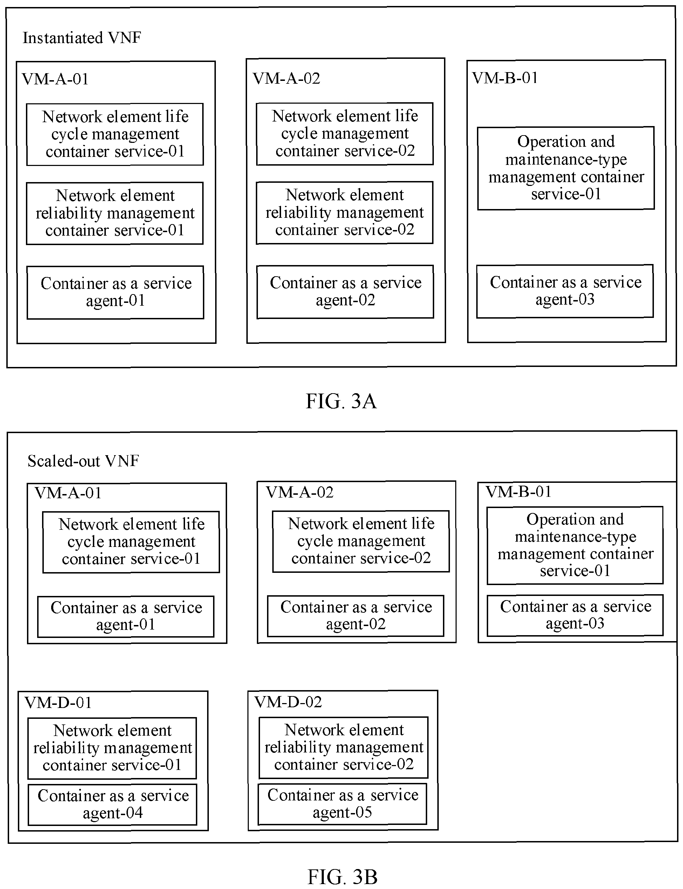

Similarly, the VNFM may further determine, based on the foregoing process of deploying the first-type container service, to deploy Life cycle-mng-pod on the VM-A-01 and the VM-A-02, deploy the CaaS agent on the VM-A-01, the VM-A-02, and the VM-B-01, and indicate that the container as a service manager deploys the Life cycle-mng-pod on the VM-A-01 and the VM-A-02, and indicate deploying the CaaS agent on VM-A-01, VM-A-02, and VM-B-01. The container as a service manager may separately deploy Life cycle-mng-pod-01 and caas agent-01 on the VM-A-01, deploy Life cycle-mng-pod-02 and caas agent-02 on the VM-A-02, and deploy caas agent-03 on the VM-B-01, to obtain an instantiated VNF shown in FIG. 3A.

Step 201 to step 210 describe the method for deploying a first-type container service in this embodiment of this application by using a scenario of instantiating a VNF. After the VNF is instantiated, the VNF may be configured to process a corresponding service. As a service volume processed by the VNF continuously increases, the VNF may need to be scaled out. Scaling out is, for example, adding a type and/or a quantity of node instances in a VNF. Alternatively, as a service volume processed by the VNF continuously decreases, the VNF may need to be scaled in. Scaling in is, for example, adding a node instance with a smaller resource specification to the VNF. VNF scaling out or VNF scaling in may also be referred to as VNF scaling for short. In a VNF scaling scenario, a new node instance may be added to the VNF, and subsequently, how to deploy a container service on a newly added node instance is further involved. The following describes this by using an example with reference to FIG. 2A and FIG. 2B.

Step 211: The requester sends an updated VNFD to the VNFM. Correspondingly, the VNFM receives the updated VNFD from the requester.

For a meaning of the requester, refer to the foregoing description. For example, a type of the first node instance that the requester requests to add to the VNF may be different from at least one type, and the at least one type is all types to which one or more node instances belong. In other words, the first node instance belongs to a new type of node instance relative to the VNF. In addition, the VNFD may not have information about the node instance of the new type. Therefore, in this embodiment of this application, the requester may configure the updated VNFD, and the updated VNFD includes the information about the node instance of the new type. For example, the information about the node instance of the new type includes type information about the node instance of the new type, type information about a container service that is supported by the node instance of the new type for deployment, and priority information about deploying each type of container service supported for deployment. In addition, the updated VNFD may further include a maximum quantity of each type of container service supported for deployment. The requester sends the updated VNFD to the VNFM. Correspondingly, the VNFM receives the updated VNFD.

It should be noted that in this embodiment of this application, adding the first node instance is used as an example, and actually, a quantity or a type of node instances added to the VNF is not limited.

Step 211 is an optional step. For example, because the VNFD may already include the information about the node instance of the new type, step 211 does not need to be performed.

Step 212: The requester sends third information to the VNFM, where the third information includes the information about the first node instance. Correspondingly, the VNFM receives the third information from the requester.

The requester may configure the third information about the first node instance, for example, type information about the first node instance. If the requester needs to add a plurality of node instances, the third information further includes a quantity of the plurality of newly added node instances. Optionally, the third information may alternatively include an identifier of the VNF, so that the VNFM determines the VNF to be scaled out.

Step 213: The VNFM determines fourth information. The fourth information includes, for example, the second priority information. The second priority information includes a priority of deploying the first-type container service on the first node instance.

The second priority information may alternatively include the priority information about the at least one node instance. The priority information about the at least one node instance indicates the priority of each of the at least one node instance. The VNFM determines the fourth information from the updated VNFD. The VNFM may alternatively determine the second information in another manner. For the another manner, refer to the foregoing manner in which the VNFM determines the second information.

Optionally, the fourth information may alternatively include a maximum quantity. For a meaning of the maximum quantity, refer to the foregoing description. For a manner in which the VNFM determines the maximum quantity, refer to the foregoing description.

Step 214: The VNFM sends a deletion request to the container as a service manager, where the deletion request is for requesting to delete the first-type container service deployed on some or all node instances in the at least one node instance. Correspondingly, the container as a service manager receives the deletion request from the VNFM.

For example, the deletion request includes identifiers of the some or all node instances in the at least one node instance, and a type identifier of the first-type container service.

If the fourth information includes the second priority information, and it is determined, based on the fourth information, that the priority of deploying the first-type container service on the first node instance meets the second condition, the VNFM may send the deletion request to the container as a service manager. The second condition is, for example, that a priority of deploying the first-type container service on the first node instance is higher than a priority of deploying the first-type container service on all or some node instances in the at least one node instance. Optionally, the request for deleting some or all the node instances in the at least one node instance in the deletion request may be a node instance, in the at least one node instance, whose priority of deploying the first-type container service is lower than a priority of deploying the first-type container service on the first node instance.

Alternatively, if the fourth information includes the second priority information and the maximum quantity, the VNFM determines that the priority of deploying the first-type container service on the first node instance meets the second condition, and determines that a total quantity of the at least one node instance is equal to the maximum quantity. In this case, the VNFM may send the deletion request to the container as a service manager.

In an example, the VNFM may alternatively send a label deletion request to the container as a service manager, where the label deletion request is for requesting to delete labels on some or all node instances in the at least one node instance. Correspondingly, the container as a service manager receives the label deletion request, and deletes the label on the at least one node instance. For a manner of determining some or all node instances in the at least one node instance, refer to the foregoing description. Optionally, the VNFM may send the label deletion request before sending the deletion request.

Step 214 is an optional step. For example, if the VNFM determines that the priority of deploying the first-type container service for the first node instance does not meet the second condition, or the VNFM determines that the first node instance supports deployment of the first-type container service, and a total quantity of the at least one node instance is less than the maximum quantity, step 214 may not be performed in the two cases.

Step 215: The container as a service manager deletes the first-type container service on the some or all node instances in the at least one node instance.

If step 214 is performed, the container as a service manager performs step 215. If step 214 is not performed, the container as a service manager does not need to perform step 215.

Step 216: The VNFM sends the second deployment request to the container as a service manager, where the second deployment request is for requesting to deploy the first-type container service on the first node instance. Correspondingly, the container as a service manager receives the second deployment request from the VNFM.

If the VNFM determines, based on the fourth information, that the priority of deploying the first-type container service on the first node instance meets the second condition, the VNFM may send the second deployment request to the container as a service manager, to request the container as a service manager to deploy the first-type container service on the first node instance.

The second deployment request includes the type identifier of the first-type container service deployed on the first node instance. Optionally, the second deployment request may alternatively include an identifier of a container service. The identifier of the container service indicates a specific container service that is in the first-type container service and that is deployed.

If step 215 is not performed, in this case, the second deployment request includes the type identifier of the first-type container service. Correspondingly, the container as a service manager may flexibly deploy a corresponding first-type container service based on an actual situation.

If step 215 is performed, it indicates that the container as a service manager deletes the first-type container service that is previously deployed on some or all node instances in the at least one node instance. In this case, the second deployment request includes the type identifier of the first-type container service and the identifier of the container service. The identifier of the container service may be an identifier of a container service that has been deleted from the some or all node instances in the at least one node instance. In this case, the container as a service manager may deploy, on the first node, a container service that is the same as the previously deleted container service. For example, the container as a service manager may migrate a file of the previously deleted first-type container service to the first node instance, to create the container service. In this way, difficulty of deploying the first-type container service on the first node by the container as a service manager is reduced. In addition, another node instance may still perform communication by using the identifier of the previously deleted container service, that is, the another node instance does not need to sense migration of the container service, thereby improving stability of an entire system.

For example, the first node instance is a VM-D-01 of a VM-D type, the at least one node instance includes a VM-A-01, and the first-type container service is a life cycle-manager-pod. The VNFM determines that a priority of deploying the life cycle-manager-pod on the VM-A-01 is lower than a priority of deploying the life cycle-manager-pod on the VM-D-01. Therefore, the VNFM may send a deletion request to the container as a service manager, and the container as a service manager deletes, based on the deletion request, the life cycle-manager-pod-01 deployed on the VM-A-01. The VNFM sends the second deployment request to the container as a service manager, where the second deployment request requests to deploy the life cycle-manager-pod-01 on the VM-D-01, and the container as a service manager deploys the life cycle-manager-pod-01 on the VM-D-01 based on the second deployment request.

In an example, the VNFM may send a second addition request to the container as a service manager, where the second addition request is for requesting to add a label to the first node instance. The label indicates that the first node instance supports deployment of the first-type container service. Correspondingly, the container as a service manager receives the second addition request. The second addition request may include the identifier of the first node instance and the type identifier of the first-type container service that is supported by the first node instance for deployment. Optionally, the VNFM may send the second addition request before sending the second deployment request.

Step 217: The container as a service manager deploys the first-type container service on the first node instance.

For example, if the container as a service manager adds a label to the first node instance, the container as a service manager may deploy the first type of container service on the first node instance based on the identifier of the first node instance in the first deployment request and the label of the first node instance.

If the container as a service manager does not add a label to the first node instance, the container as a service manager may deploy the first-type container service on the first node based on the type identifier of the first-type container service deployed on the first node instance in the second deployment request and the identifier of the container service.

For example, still refer to the example shown in FIG. 3A, the first node instance includes a VM-D-01 and a VM-D-02 of the VM-D type, and a maximum quantity of Ha-Mng-Pods is 2. Priorities of deploying the Ha-Mng-Pod on the VM-D-01 and the VM-D-02 are the same, and the priorities of deploying the Ha-Mng-Pod are both higher than the priorities of deploying the Ha-Mng-Pod on the VM-A type of the node instance. Therefore, the VNFM determines to send a deletion request to the container service manager, where the deletion request is for requesting to delete the Ha-Mng-Pod deployed on the VM-A-01 and the VM-A-02. The container as a service manager deletes, based on the deletion request, the Ha-Mng-Pod-01 deployed on the VM-A-01, and the Ha-Mng-Pod-02 deployed on the VM-A-02. The VNFM sends the second deployment request to the container as a service manager, where the second deployment request is for requesting to deploy the Ha-Mng-Pod-01 and the Ha-Mng-Pod-02 on the VM-D-01 and the VM-D-02 respectively. The container as a service manager receives the second deployment request, and respectively deploys the Ha-Mng-Pod-01 and the Ha-Mng-Pod-02 on the VM-D-01 and the VM-D-02, to obtain a scaled-out VNF shown in FIG. 3B.

In the embodiment shown in FIG. 2A and FIG. 2B, the VNFM may determine the at least one node instance for deploying the first-type container service based on priority information about deploying the first-type container service on the one or more node instances, and deploy the first-type container service on the at least one node instance, thereby providing a mechanism for deploying a container service on a node instance. Further, a quantity of node instances for deploying the first-type container service may further be limited based on the maximum quantity of node instances for deploying the first-type container service, so that the quantity of node instances for deploying the first-type container service can be reduced, thereby avoiding deploying the first-type container service on excessive node instances. In addition, when scaling is performed on the VNF, the VNFM may determine, based on a high/low relationship between a priority of deploying the first-type container service on the newly added first node instance and a priority of deploying the first-type container service on the at least one node instance, whether to deploy the first-type container service on the newly added first node instance. This provides a mechanism for deploying a first-type container service in a VNF scaling scenario. In addition, the first-type container service deployed on the at least one node instance may be selectively deleted based on the newly added first node instance and a quantity of the at least one node instance, so that a case in which excessive first-type container services are deployed can be avoided.

Optionally, step 202 to step 204, step 207 and step 208, and step 211 to step 217 are all optional steps.

An embodiment of this application further provides another technical solution. In this technical solution, a maximum quantity corresponding to a first-type container service, that is, a maximum quantity of first-type node instances to be deployed on the container service, is determined, and after a node instance is created, a node instance that meets the maximum quantity is selected from the created node instance to deploy the first-type container service, thereby providing a mechanism for deploying a first-type container service. In some cases, some types of container services may not process a large quantity of services. Therefore, if first-type container services are deployed on excessive node instances, these container services occupy resources on the node instances, but do not implement corresponding services. That is, resource allocation of the node instances is improper. However, in this technical solution, a quantity of node instances for deploying the first-type container service may be limited based on the maximum quantity, so that the quantity of node instances for deploying the first-type container service can be reduced, thereby avoiding a case in which resource allocation is improper because the first-type container service is deployed on excessive node instances.

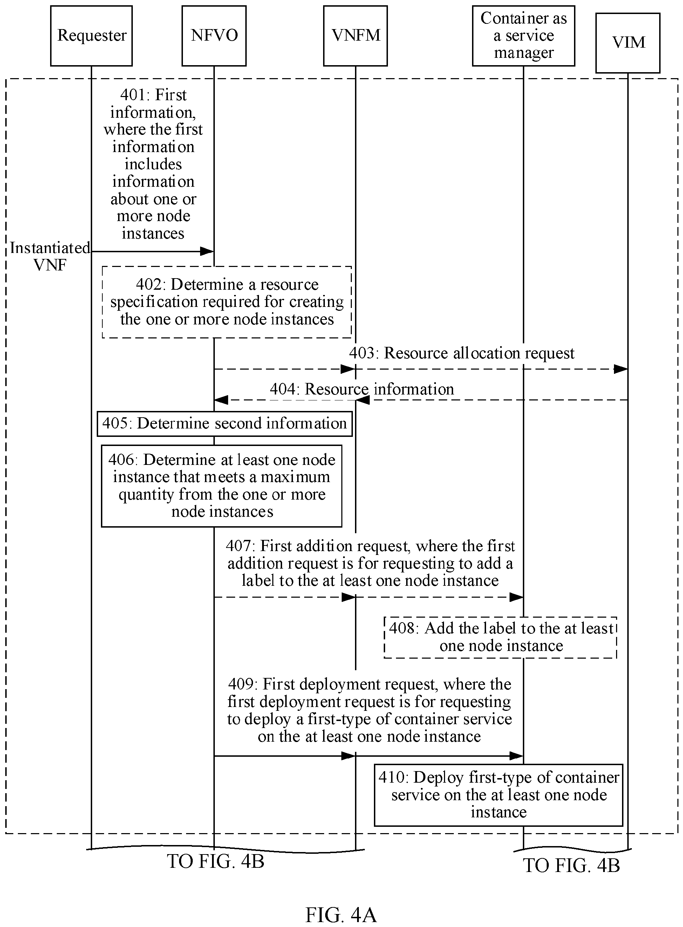

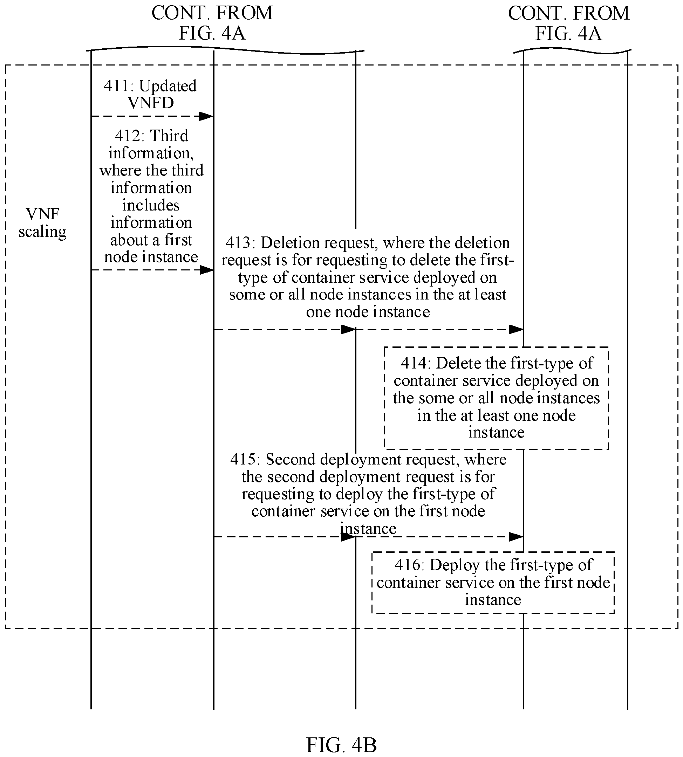

The following describes the technical solution with reference to a flowchart of a method for deploying a container service according to an embodiment of this application shown in FIG. 4A and FIG. 4B. The method may be performed by a communication system. For a meaning of the communication system, refer to the foregoing description. In a description process of FIG. 4A and FIG. 4B, an example in which the method for deploying a container service is applied to the NFV architecture shown in FIG. 1C and the first network element is an NFVO is used.

Step 401: A requester sends first information to an NFVO, where the first information includes information about one or more node instances. Correspondingly, the NFVO receives the first information from the requester.

For a meaning of the requester, a meaning of the first information, a manner of generating the first information, and a meaning of the one or more node instances, refer to the foregoing description.

Step 402: The NFVO determines a resource specification required for creating one or more node instances.

For a manner of determining the resource specification of the one or more node instances and a meaning of the resource specification, refer to the foregoing description.

Step 403: The NFVO sends a resource allocation request to a VIM through a VNFM. Correspondingly, the VIM receives the resource allocation request from the NFVO through the VNFM.

For a meaning of the resource allocation request, refer to the foregoing description. In FIG. 4A and FIG. 4B, an example in which the NFVO sends the resource allocation request to the VIM through the VNFM is used. A manner in which the NFVO sends the resource allocation request to the VIM is actually not limited.

Step 404: The VIM sends the resource information to the NFVO through the VNFM. Correspondingly, the NFVO receives the resource information from the VIM through the VNFM.

For a meaning of the resource information and a manner in which the VIM determines the resource information, refer to the foregoing description. In FIG. 4A and FIG. 4B, an example in which the VIM sends the resource information to the NFVO through the VNFM is used. A manner in which the VIM sends the resource information to the NFVO is actually not limited.

Step 405: The NFVO determines second information. The second information includes a maximum quantity. The maximum quantity is a maximum quantity of node instances to be deployed for the first-type container service.

For a meaning of the maximum quantity, refer to the foregoing description. For a manner of determining the second information by the NFVO, refer to the manner of determining the second information by the VNFM in the foregoing description.

Optionally, the second information alternatively includes first priority information. For a meaning of the first priority information, refer to the foregoing description.

Step 406: The NFVO determines, from one or more node instances, at least one node instance that meets the maximum quantity.

If the second information includes the maximum quantity, and a quantity of node instances that are in the one or more node instances and that support deployment of the first-type container service is less than or equal to the maximum quantity, the NFVO may determine, as the at least one node instance, the node instance that is in the one or more node instances and that supports deployment of the first-type container service. If a quantity of node instances that are in the one or more node instances and that support deployment of the first-type container service is greater than the maximum quantity, the NFVO may determine, from the node instances that are in the one or more node instances and that support deployment of the first-type container service, at least one node instance that is less than or equal to the maximum quantity.

If the second information further includes the second priority information, the NFVO may determine, from the one or more node instances, at least one node instance whose priority of deploying the first-type container service meets the first condition and whose quantity is less than or equal to the maximum quantity. For a meaning of the first condition, refer to the foregoing description.

Step 407: The NFVO sends a first addition request to the container as a service manager through the VNFM, where the first addition request is for requesting to add a label to the at least one node instance. Correspondingly, the container as a service manager receives the first addition request from the NFVO through the VNFM.

For a meaning of the label, refer to the foregoing description. In FIG. 4A and FIG. 4B, an example in which the NFVO sends the first addition request to the container as a service manager through the VNFM is used. A manner in which the NFVO sends the first addition request to the container as a service manager is actually not limited.

Step 408: The container as a service manager adds a label to the at least one node instance.

For the meaning of the label and a manner of adding the label by the container as a service manager, refer to the foregoing description.

Step 409: The NFVO sends a first deployment request to the container as a service manager through the VNFM, where the first deployment request is for requesting to deploy the first-type container service on the at least one node instance. Correspondingly, the container as a service manager receives the first deployment request from the NFVO through the VNFM.

Step 410: The container as a service manager deploys the first-type container service on the at least one node instance.

The foregoing step 401 to step 410 describe a process of deploying the first-type container service in a VNF instantiation scenario. Subsequently, scaling may need to be performed on the VNF. The following continues to describe, with reference to FIG. 4A and FIG. 4B, an example of a process of deploying the first-type container service in a scaling scenario.

Step 411: The NFVO receives an updated VNFD from the requester.

For a meaning of the updated VNFD, refer to the foregoing description.

Step 412: The NFVO receives third information from the requester, where the third information includes information about a first node instance.

For a manner of generating the third information by the requester, refer to the foregoing description.

Step 413: The NFVO sends a deletion request to the container as a service manager through the VNFM, where the deletion request is for requesting to delete the first-type container service deployed on some or all node instances in the at least one node instance. Correspondingly, the container as a service manager receives the deletion request from the NFVO through the VNFM.

For content of the deletion request, a manner of determining some or all node instances in the at least one node instance, and a condition for triggering the NFVO to send the deletion request, refer to the foregoing description.

Step 414: The container as a service manager deletes the first-type container service deployed on the some or all node instances in the at least one node instance.

For content of deleting the first-type container service deployed on some or all node instances in the at least one node instance by the container as a service manager, refer to the foregoing description.

Step 415: The NFVO sends a second deployment request to the container as a service manager through the VNFM, where the second deployment request is for requesting to deploy the first-type container service on the first node instance. Correspondingly, the container as a service manager receives the second deployment request from the NFVO through the VNFM.

For a meaning of the second deployment request and a manner of deploying the first-type container service on the first node instance, refer to the foregoing description.

In an example, the NFVO may send the second addition request to the container as a service manager. For a meaning of the second addition request, refer to the foregoing description. Correspondingly, the container as a service manager receives the second addition request, and adds a label to the first node instance. For a meaning of the label, refer to the foregoing description.

Step 416: The container as a service manager deploys the first-type container service on the first node instance.

For a manner of deploying the first-type container service by the container as a service manager, refer to the foregoing description.

In an example, step 402 to step 404, step 407 and step 408, and step 411 to step 416 are all optional steps.

In the embodiment shown in FIG. 4A and FIG. 4B, during VNF instantiation, the NFVO may determine, based on the maximum quantity corresponding to the first-type container service, at least one node instance that is less than or equal to the maximum quantity from one or more VNFs required for instantiating the VNF. The container as a service manager deploys the first-type container service on the at least one node instance. This provides a mechanism for deploying a container service. In addition, a quantity of node instances for deploying the first-type container service is limited based on the maximum quantity, to avoid deploying the first-type container service on excessive node instances.

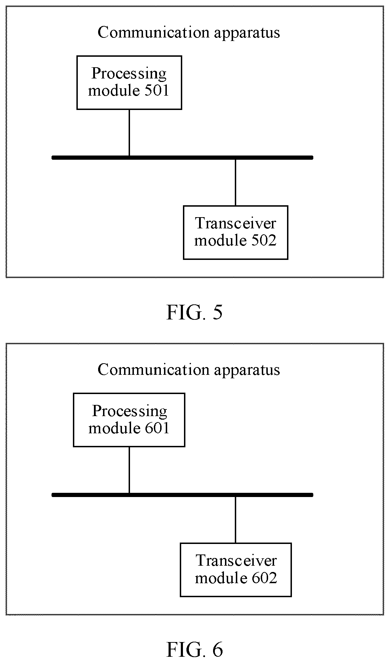

Based on a same inventive concept, an embodiment of this application further provides a communication apparatus. FIG. 5 is a schematic diagram of a structure of a possible communication apparatus according to an embodiment of this application. The communication apparatus shown in FIG. 5 may be configured to implement a function of the first network element in the foregoing method embodiment, and therefore can also implement beneficial effects of the foregoing method embodiment. In this embodiment of this application, the communication apparatus shown in FIG. 5 may be a chip system with a function of an NFVO or a VNFM.

As shown in FIG. 5, the communication apparatus includes a transceiver module 501 and a processing module 502.

In an embodiment, the communication apparatus may be configured to implement a function of the first network element in the method embodiment shown in FIG. 2A and FIG. 2B. For a specific function, refer to the description in the foregoing method embodiment. For example, the communication apparatus may be configured to implement a function of the VNFM in the method embodiment shown in FIG. 2A and FIG. 2B.

Based on a same inventive concept, an embodiment of this application further provides a communication apparatus. FIG. 6 is a schematic diagram of a structure of a possible communication apparatus according to an embodiment of this application. The communication apparatus shown in FIG. 6 may be configured to implement a function of the first network element in the foregoing method embodiment, and therefore can also implement beneficial effects of the foregoing method embodiment. In this embodiment of this application, the communication apparatus shown in FIG. 6 may be a chip system with a function of an NFVO or a VNFM.

As shown in FIG. 6, the communication apparatus includes a transceiver module 601 and a processing module 602.

In an embodiment, the communication apparatus may be configured to implement a function of the first network element in the method embodiment shown in FIG. 4A and FIG. 4B. For a specific function, refer to the description in the foregoing method embodiment. For example, the communication apparatus may be configured to implement a function of the NFVO in the method embodiment shown in FIG. 4A and FIG. 4B.

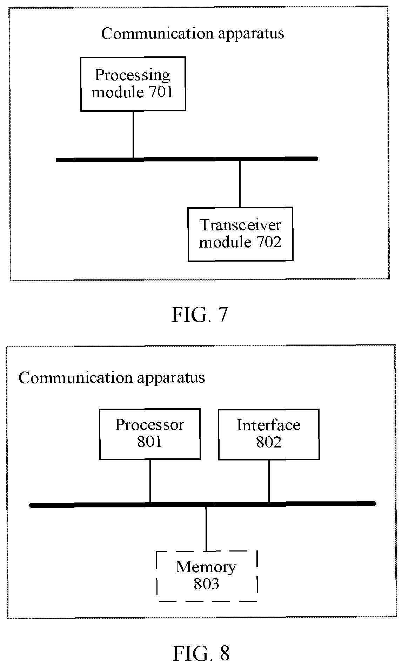

Based on a same inventive concept, an embodiment of this application further provides a communication apparatus. FIG. 7 is a schematic diagram of a structure of a possible communication apparatus according to an embodiment of this application. The communication apparatus shown in FIG. 7 may be configured to implement a function of the first network element in the foregoing method embodiment, and therefore can also implement beneficial effects of the foregoing method embodiment. In this embodiment of this application, the communication apparatus shown in FIG. 7 may be a chip system with a function of a container as a service manager.

As shown in FIG. 7, the communication apparatus includes a transceiver module 701 and a processing module 702.

In an embodiment, the communication apparatus may be configured to implement a function of the container as a service manager in the method embodiment shown in FIG. 2A and FIG. 2B or FIG. 4A and FIG. 4B. For a specific function, refer to the description in the foregoing method embodiment. For example, the communication apparatus may be configured to implement a function of the container as a service manager in the method embodiment shown in FIG. 2A and FIG. 2B or FIG. 4A and FIG. 4B.

Based on a same inventive concept, an embodiment of this application further provides a communication apparatus. FIG. 8 is a schematic diagram of a structure of a possible communication apparatus according to an embodiment of this application. The communication apparatus shown in FIG. 8 may be configured to implement a function of the first network element in the foregoing method embodiment, and therefore can also implement beneficial effects of the foregoing method embodiment. In this embodiment of this application, for a specific possible form of the communication apparatus shown in FIG. 8, refer to the specific possible form of the communication apparatus shown in FIG. 5. Details are not described herein again.

As shown in FIG. 8, the communication apparatus includes a processor 801 and an interface 802. The processor 801 and the interface 802 are coupled to each other. It may be understood that the interface 802 may be a transceiver or an input/output interface.

The communication apparatus may include one or more processors 801. The processor 801 may also be referred to as a processing unit, and may implement a specific control function. The processor 801 may be a general-purpose processor, a dedicated processor, or the like. The processor 801 may include, for example, a baseband processor, a central processing unit, and the like. The baseband processor may be configured to process a communication protocol and communication data. The central processing unit may be configured to control the communication apparatus, execute a software program, and/or process data. Different processors may be independent components, or may be disposed in one or more processing circuits, for example, integrated into one or more application-specific integrated circuits.

Optionally, the communication apparatus includes one or more memories 803, configured to store instructions. The instructions may be run on the processor, so that the communication apparatus performs the method described in the foregoing method embodiment. The memory 803 in the communication apparatus is an optional component, and is shown by using a dashed box in FIG. 8.

Optionally, the memory 803 may alternatively store data. The processor and the memory may be separately disposed, or may be integrated together.

Optionally, the communication apparatus may further include a memory 803, configured to store instructions executed by the processor 801, or store input data required by the processor 801 to run the instructions, or store data generated after the processor 801 runs the instructions.

In an embodiment, when the communication apparatus is configured to implement the method embodiment shown in FIG. 2A and FIG. 2B, the communication apparatus may be configured to implement a function of the first network element in the method embodiment shown in FIG. 2A and FIG. 2B. For a specific function, refer to the description in the foregoing method embodiment.

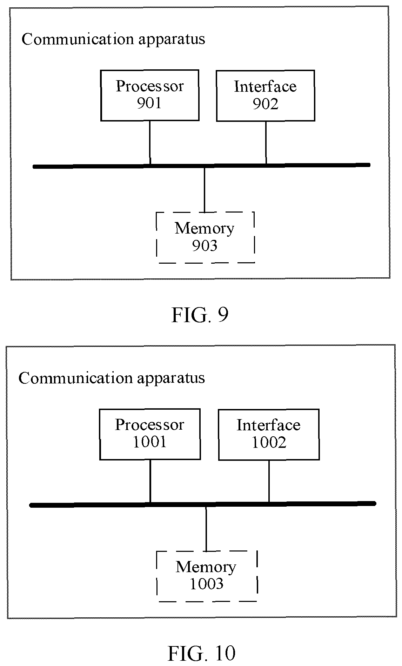

Based on a same inventive concept, an embodiment of this application further provides a communication apparatus. FIG. 9 is a schematic diagram of a structure of a possible communication apparatus according to an embodiment of this application. The communication apparatus shown in FIG. 9 may be configured to implement a function of the first network element in the foregoing method embodiment, and therefore can also implement beneficial effects of the foregoing method embodiment. In this embodiment of this application, for a specific possible form of the communication apparatus shown in FIG. 9, refer to the specific possible form of the communication apparatus shown in FIG. 6. Details are not described herein again.

As shown in FIG. 9, the communication apparatus includes a processor 901 and an interface 902. The processor 901 and the interface 902 are coupled to each other. It may be understood that the interface 902 may be a transceiver or an input/output interface. Optionally, the communication apparatus further includes a memory 903. In FIG. 9, a dashed box is used to indicate that the memory 903 is an optional component. For specific implementation forms of the processor 901, the interface 902, and the memory 903, refer to the description in FIG. 8.

In an embodiment, when the communication apparatus is configured to implement the method embodiment shown in FIG. 4A and FIG. 4B, the communication apparatus may be configured to implement a function of the first network element in the method embodiment shown in FIG. 4A and FIG. 4B. For a specific function, refer to the description in the foregoing method embodiment.

Based on a same inventive concept, an embodiment of this application further provides a communication apparatus. FIG. 10 is a schematic diagram of a structure of a possible communication apparatus according to an embodiment of this application. The communication apparatus shown in FIG. 10 may be configured to implement a function of the container as a service manager in the foregoing method embodiment, and therefore can also implement beneficial effects of the foregoing method embodiment. In this embodiment of this application, for a specific possible form of the communication apparatus shown in FIG. 10, refer to the specific possible form of the communication apparatus shown in FIG. 7. Details are not described herein again.

As shown in FIG. 10, the communication apparatus includes a processor 1001 and an interface 1002. The processor 1001 and the interface 1002 are coupled to each other. It may be understood that the interface 1002 may be a transceiver or an input/output interface. Optionally, the communication apparatus further includes a memory 1003. In FIG. 10, a dashed box is used to indicate that the memory 1003 is an optional component. For specific implementation forms of the processor 1001, the interface 1002, and the memory 1003, refer to the description in FIG. 8.

In an embodiment, when the communication apparatus is configured to implement the method embodiment shown in FIG. 2A and FIG. 2B or FIG. 4A and FIG. 4B, the communication apparatus may be configured to implement a function of the container as a service manager in the method embodiment shown in FIG. 2A and FIG. 2B or FIG. 4A and FIG. 4B. For a specific function, refer to the description in the foregoing method embodiment.

Based on a same inventive concept, an embodiment of this application further provides a communication system. The communication system may include the communication apparatus shown in FIG. 5 and the communication apparatus shown in FIG. 7.

Based on a same inventive concept, an embodiment of this application further provides a communication system. The communication system may include the communication apparatus shown in FIG. 6 and the communication apparatus shown in FIG. 7.

Based on a same inventive concept, an embodiment of this application provides a computer-readable storage medium. The computer-readable storage medium is configured to store a computer program. When the computer program is run on a computer, the computer is enabled to perform the method according to any one of FIG. 2A and FIG. 2B or FIG. 4A and FIG. 4B.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can instruct the computer or another programmable data processing device to work in a specific manner, so that the instructions stored in the computer readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A method for deploying a container service, comprising:
receiving first information, wherein the first information comprises information about one or more node instances, and the one or more node instances are for instantiating a virtualized network function VNF;
determining second information, wherein the second information comprises first priority information, and the first priority information indicates one or more priorities of deploying a first-type container service on the one or more node instances; and
sending a first deployment request to a container as a service manager, wherein the first deployment request is for requesting to deploy the first-type container service on at least one node instance of the one or more node instances, and the at least one node instance is a node instance whose priority of deploying the first-type container service meets a first condition.

2. The method according to claim 1, wherein the first condition comprises:
a priority of deploying the first-type container service is higher than or equal to a preset priority; or
a sequence number of a priority of deploying the first-type container service is less than or equal to N, wherein N is a positive integer, and the sequence number of the priority is obtained by sorting the priorities of deploying the first-type container service on the one or more node instances based on a preset sequence.

3. The method according to claim 1 or 2, wherein the second information further comprises a maximum quantity, and the maximum quantity is a maximum quantity of node instances to be deployed for the first-type container service, wherein a quantity of the at least one node instance is less than or equal to the maximum quantity.

4. The method according to claim 3, wherein determining the maximum quantity comprises:
determining the maximum quantity from a virtualized network function descriptor VNFD, wherein the VNFD comprises a maximum quantity of node instances to be deployed for one or more types of container services, and the first-type container service is one of the one or more types of container services.

5. The method according to any one of claims 1 to 4, wherein the determining second information comprises:
determining the first priority information from the VNFD based on type information about the one or more node instances comprised in the information about the one or more node instances, wherein the VNFD comprises type information about a node instance, type information about a container service that each type of node instance supports for deployment, and priority information about deploying one or more types of container services on each type of node instance.

6. The method according to claim 5, wherein
priorities of deploying a same type of container services on different types of node instances in the VNFD are different; and/or
priorities of deploying different types of container services on a same type of node instances in the VNFD are different.

7. The method according to any one of claims 1 to 6, wherein the method further comprises:
sending a first addition request to the container as a service manager, wherein the first addition request is for requesting to add a label to the at least one node instance, and the label indicates that the node instance supports deployment of the first-type container service.

8. The method according to any one of claims 1 to 7, wherein the method further comprises:
receiving third information, wherein the third information comprises information about a first node instance, and the first node instance is a node instance to be added to the VNF;
determining fourth information, wherein the fourth information comprises second priority information, and the second priority information comprises a priority of deploying the first-type container service on the first node instance; and
sending a second deployment request to the container as a service manager, if the priority of deploying the first-type container service on the first node instance meets a second condition, wherein the second deployment request is for requesting to deploy the first-type container service on the first node instance.

9. The method according to claim 8, wherein the second condition comprises:
the priority of deploying the first-type container service on the first node instance is higher than a priority of deploying the first-type container service on some or all node instances in the at least one node instance.

10. The method according to claim 8 or 9, wherein the method further comprises:
sending a deletion request to the container as a service manager, wherein the deletion request is for requesting to delete the first-type container service deployed on the some or all node instances in the at least one node instance.

11. The method according to claim 10, wherein the method further comprises:
determining that the quantity of the at least one node instance is equal to the maximum quantity, wherein the second information further comprises the maximum quantity, and the maximum quantity is a maximum quantity of node instances to be deployed for the first-type container service.

12. The method according to any one of claims 1 to 11, wherein the method further comprises:
sending a resource allocation request to a virtualized infrastructure manager VIM, wherein the resource allocation request is for requesting to allocate a resource to the one or more node instances; and
receiving resource information from the VIM, wherein the resource information indicates resources of the one or more node instances.

13. A method for deploying a container service, comprising:
receiving first information, wherein the first information comprises information about one or more node instances, and the one or more node instances are for instantiating a virtualized network function VNF;
determining second information, wherein the second information comprises a maximum quantity, and the maximum quantity is a maximum quantity of node instances to be deployed for a first-type container service; and
sending a first deployment request to a container as a service manager, wherein the first deployment request is for requesting to deploy the first-type container service on at least one node instance of the one or more node instances, and a quantity of the at least one node instance is less than or equal to the maximum quantity.

14. The method according to claim 13, wherein the determining second information comprises:
determining the maximum quantity from a virtualized network function descriptor VNFD, wherein the VNFD comprises a maximum quantity of node instances to be deployed for one or more types of container services, and the first-type container service is one of the one or more types of container services.

15. The method according to claim 13 or 14, wherein the second information further comprises first priority information, and the first priority information indicates a priority of deploying the first-type container service on the at least one node instance, wherein the at least one node instance is a node instance whose priority of deploying the first-type container service meets a first condition.

16. The method according to claim 15, wherein the first condition comprises:
a priority of deploying the first-type container service is higher than or equal to a preset priority; or
a sequence number of a priority of deploying the first-type container service is less than or equal to N, wherein N is a positive integer, and the sequence number of the priority is obtained by sorting the priorities of deploying the first-type container service on the one or more node instances based on a preset sequence.

17. The method according to claim 15 or 16, wherein the method further comprises:
determining the first priority information from the virtualized network function descriptor VNFD based on type information about the one or more node instances comprised in the information about the one or more node instances, wherein the VNFD comprises type information about a node instance, type information about a container service that each type of node instance supports for deployment, and priority information about deploying one or more types of container services on each type of node instance.

18. The method according to claim 17, wherein
priorities of deploying a same type of container services on different types of node instances in the VNFD are different; and/or
priorities of deploying different types of container services on a same type of node instances in the VNFD are different.

19. The method according to any one of claims 13 to 18, wherein the method further comprises:
sending a first addition request to the container as a service manager, wherein the first addition request is for requesting to add a label to the at least one node instance, and the label indicates that the node instance supports deployment of the first-type container service.

20. The method according to any one of claims 13 to 19, wherein the method further comprises:
receiving third information, wherein the third information comprises information about a first node instance, and the first node instance is a node instance to be added to the VNF; and
sending a second deployment request to the container as a service manager, if the quantity of the first node instances is less than the maximum quantity, wherein the second deployment request is for requesting to deploy the first-type container service on the first node instance.

21. The method according to claim 20, wherein the method further comprises:
sending a deletion request to the container as a service manager, if it is determined that the quantity of the at least one node instance is equal to the maximum quantity and a priority of deploying the first-type container service on the first node instance meets a second condition, wherein the deletion request is for requesting to delete the first-type container service deployed on some or all node instances in the at least one node instance, the second information further comprises the first priority information, and the first priority information indicates the priority of deploying the first-type container service on the first node instance.

22. The method according to claim 21, wherein the second condition comprises:
the priority of deploying the first-type container service on the first node instance is higher than a priority of deploying the first-type container service on the some or all node instances in the at least one node instance.

23. The method according to any one of claims 13 to 22, wherein the method further comprises:
sending a resource allocation request to a virtualized infrastructure manager VIM, wherein the resource allocation request is for requesting to allocate a resource to the one or more node instances; and
receiving resource information from the VIM, wherein the resource information indicates resources of the one or more node instances.

24. A method for deploying a container service, comprising:
receiving a first deployment request, wherein the first deployment request is for requesting to deploy a first-type container service on at least one node instance, the at least one node instance is a node instance whose priority of deploying the first-type container service meets a first priority condition, and/or a quantity of the at least one node instance is less than or equal to a maximum quantity, the at least one node instance is for instantiating a virtualized network function VNF, and the maximum quantity is a maximum quantity of node instances to be deployed for the first-type container service; and
deploying the first-type container service on the at least one node instance.

25. The method according to claim 24, wherein the method further comprises:
receiving a first addition request, wherein the first addition request indicates to add a label to the at least one node instance, and the label indicates that the node instance supports deployment of the first-type container service; and
adding the label to the at least one node instance.

26. The method according to claim 24 or 25, wherein the method further comprises:
receiving a second deployment request, wherein the second deployment request is for requesting to deploy the container service on a first node instance, and the first node instance is a node instance to be added to the VNF; and
deploying the first-type container service on the first node instance.

27. The method according to claim 26, wherein the method further comprises:
receiving a deletion request, wherein the deletion request is for requesting to delete the first-type container service deployed on the at least one node instance; and
deleting the first-type container service deployed on the at least one node instance.

28. A method for deploying a container service, comprising:
receiving, by a first network element, first information, wherein the first information comprises information about one or more node instances, the one or more node instances are for instantiating a virtualized network function VNF, and the first network element is a network function virtualization orchestrator NFVO or a network function virtualization manager VNFM;
determining, by the first network element, second information, wherein the second information comprises first priority information, and the first priority information indicates one or more priorities of deploying a first-type container service on the one or more node instances;
sending, by the first network element, a first deployment request to a container as a service manager, wherein the first deployment request is for requesting to deploy the first-type container service on at least one node instance of the one or more node instances, and the at least one node instance is a node instance whose priority of deploying the first-type container service meets a first condition; and
deploying, by the container as a service manager, the first-type container service on the at least one node instance.

29. A method for deploying a container service, comprising:
receiving, by a first network element, first information, wherein the first information comprises information about one or more node instances, and the one or more node instances are for instantiating a virtualized network function VNF;
determining second information, wherein the second information comprises a maximum quantity, and the maximum quantity is a maximum quantity of node instances to be deployed for a first-type container service;
sending a first deployment request to a container as a service manager, wherein the first deployment request is for requesting to deploy the first-type container service on at least one node instance of the one or more node instances, and a quantity of the at least one node instance is less than or equal to the maximum quantity; and
deploying, by the container as a service manager, the first-type container service on the at least one node instance.

30. A communication apparatus, comprising:
a transceiver module, configured to receive first information, wherein the first information comprises information about one or more node instances, and the one or more node instances are for instantiating a virtualized network function VNF; and
a processing module, configured to determine second information, wherein the second information comprises first priority information, and the first priority information indicates one or more priorities of deploying a first-type container service on the one or more node instances, wherein
the transceiver module is configured to send a first deployment request to a container as a service manager, wherein the first deployment request is for requesting to deploy the first-type container service on at least one node instance of the one or more node instances, and the at least one node instance is a node instance whose priority of deploying the first-type container service meets a first condition.

31. A communication apparatus, comprising:
a transceiver module, configured to receive first information, wherein the first information comprises information about one or more node instances, and the one or more node instances are for instantiating a virtualized network function VNF; and
a processing module, configured to determine second information, wherein the second information comprises a maximum quantity, and the maximum quantity is a maximum quantity of node instances to be deployed for a first-type container service, wherein
the transceiver module is configured to send a first deployment request to a container as a service manager, wherein the first deployment request is for requesting to deploy the first-type container service on at least one node instance of the one or more node instances, and a quantity of the at least one node instance is less than or equal to the maximum quantity.

32. A communication apparatus, comprising:
a transceiver module, configured to receive a first deployment request, wherein the first deployment request is for requesting to deploy a first-type container service on at least one node instance, the at least one node instance is a node instance whose priority of deploying the first-type container service meets a first priority condition, and/or a quantity of the at least one node instance is less than or equal to a maximum quantity, the at least one node instance is for instantiating a virtualized network function VNF, and the maximum quantity is a maximum quantity of node instances to be deployed for the first-type container service; and
a processing module, configured to deploy the first-type container service on the at least one node instance.

33. A communication system, wherein the communication system comprises the communication apparatus according to claim 30 and the communication apparatus according to claim 32; or
the communication system comprises the communication apparatus according to claim 31 and the communication apparatus according to claim 32.

34. A communication apparatus, comprising a processor and a memory, wherein the memory is configured to store one or more computer programs, the one or more computer programs comprise computer-executable instructions, and when the communication apparatus runs, the processor executes the one or more computer programs stored in the memory, enabling the communication apparatus to implement the method according to any one of claims 1 to 12, or implements the method according to any one of claims 13 to 23, or implements the method according to claims 24 to 27.

35. A chip system, wherein the chip system comprises:
a processor and an interface, wherein the processor is configured to invoke the interface and run instructions, and when the processor executes the instructions, the method according to any one of claims 1 to 12, or the method according to any one of claims 13 to 23, or the method according to claims 24 to 27 is implemented.

36. A computer-readable storage medium, wherein the computer-readable storage medium is configured to store a computer program, and when the computer program is run on a computer, the computer is enabled to perform the method according to any one of claims 1 to 12, or implement the method according to any one of claims 13 to 23, or implement the method according to claims 24 to 27.
